# EUROPEAN PATENT APPLICATION

(11) **EP 4 716 194 A1**
(43) Date of publication of application: **25.03.2026**
(21) Application number: 24838249.1
(22) Date of filing: 15.01.2024
(51) Int. Cl.: H04L 67/51

(54) **SERVICE GOVERNANCE METHOD AND APPARATUS, AND COMPUTER-READABLE STORAGE MEDIUM**

(30) Priority: 07.07.2023 CN 202310834268; 18.09.2023 CN 202311207362
(71) Applicant: Huawei Cloud Computing Technologies Co., Ltd., Guiyang, Guizhou, 550025 (CN)
(72) Inventor: ZHAO, Yujin, Guiyang, Guizhou 550025 (CN); XU, Wengui, Guiyang, Guizhou 550025 (CN); ZHU, Na, Guiyang, Guizhou 550025 (CN); YANG, Yi, Guiyang, Guizhou 550025 (CN); LI, Chunhan, Guiyang, Guizhou 550025 (CN)
(74) Representative: Grünecker Patent- und Rechtsanwälte PartG mbB
(86) International application number: PCT/CN2024/072290
(87) International publication number: WO 2025/010985

(57) **Abstract**

This application provides a service governance method and apparatus, and a computer-readable storage medium. The method is applied to a master node that manages virtual private clouds of a plurality of tenants, where a cluster is deployed in the virtual private cloud, and a service is deployed in the cluster. The master node manages a managed cluster of a target tenant, where a target service is deployed in the managed cluster. The method includes: determining service information corresponding to the target tenant, where the service information indicates information about a service instance of the target service in the managed cluster; creating a gateway corresponding to the target tenant, where the gateway includes a traffic monitoring rule; determining a traffic processing rule corresponding to the target service, where the traffic processing rule is associated with a target monitoring rule in the traffic monitoring rule; and sending the service information, the target monitoring rule, and the traffic processing rule to a traffic proxy in a virtual private cloud of the target tenant, to cause the traffic proxy to perform service governance on the target service. A service governance rule of a tenant is sent to a proxy in a virtual private cloud of the tenant, to implement data isolation, and improve data security.

## Description

This application claims priorities to Chinese Patent Application No. 202310834268.4, filed with the China National Intellectual Property Administration on July 7, 2023 and entitled "SERVICE MANAGEMENT METHOD AND APPARATUS", and to Chinese Patent Application No. 202311207362.3, filed with the China National Intellectual Property Administration on September 18, 2023 and entitled "SERVICE GOVERNANCE METHOD AND APPARATUS, AND COMPUTER-READABLE STORAGE MEDIUM", both of which are incorporated herein by reference in their entireties.

### TECHNICAL FIELD

This application relates to the field of service governance technologies, and in particular, to a service governance method and apparatus, and a computer-readable storage medium.

### BACKGROUND

Kubernetes (k8s for short) is a de facto standard in the field of container orchestration, and resolves problems of orchestration and management of container clusters. However, for mutual access between a plurality of clusters or accessing a service in k8s by using north-south traffic outside a cluster, k8s does not provide an automation solution, and configuration can only be performed manually. The configuration has high complexity and is prone to an error. As a microservice governance platform, an open-source service mesh project Istio supports k8s well, and may be used as a gateway for access outside k8s to support cross-cluster mutual access.

An Istio-based cloud native gateway solution includes a solution with a single control plane and a plurality of data planes. However, in a multi-tenant scenario, in the solution with a single control plane and a plurality of data planes, the Istio considers that same services in different k8s clusters are a same service. Even if the k8s clusters belong to different tenants, data is not isolated, resulting in low data security.

Information disclosed in the background is only intended to improve understanding of the overall background of this application, and should not be considered as an acknowledgment or any form of implication that the information constitutes a conventional technology well known to a person of ordinary skill in the art.

### SUMMARY

Embodiments of this application provide a service governance method and apparatus, and a computer-readable storage medium. A single control plane creates gateways of different tenants, and different tenants independently configure service governance rules. During service governance, a service governance rule of a tenant is sent to a proxy in a virtual private cloud of the tenant, to implement data isolation, and improve data security.

According to a first aspect, an embodiment of this application provides a service governance method, applied to a master node, where the master node manages virtual private clouds of a plurality of tenants, a cluster is deployed in the virtual private cloud, and a service is deployed in the cluster; the master node manages a managed cluster of a target tenant in the plurality of tenants, and a target service is deployed in the managed cluster; and the method includes:
determining service information corresponding to the target tenant, where the service information indicates information about a service instance of the target service in the managed cluster; creating a gateway corresponding to the target tenant, where the gateway includes a traffic monitoring rule; determining a traffic processing rule corresponding to the target service, where the traffic processing rule is associated with a target monitoring rule in the traffic monitoring rule; and sending the service information, the target monitoring rule, and the traffic processing rule to a traffic proxy in a virtual private cloud of the target tenant, where the traffic proxy is configured to perform service governance on the target service based on the service information, the traffic monitoring rule, and the target monitoring rule.

In this solution, a single control plane creates gateways of different tenants, and different tenants independently configure service governance rules. During service governance, a service governance rule of a tenant is sent to a proxy in a virtual private cloud of the tenant, to implement data isolation, and improve data security.

In a possible implementation, the target service is located in a first namespace of the managed cluster; the target service is located in a second namespace of the master node; and when managed clusters of different target tenants include the target service located in the first namespace, second namespaces that are of the master node and in which the target service of different target tenants is located are different.

In this solution, the control plane implements service isolation at a tenant level by using a namespace.

In a possible implementation, the method further includes: creating the second namespace, and mapping the target service to the second namespace. For example, information that is in the service information and that is located in the first namespace is mapped to the second namespace.

In a possible implementation, creating the second namespace includes: installing a cluster synchronizer in the managed cluster of the target tenant; and creating the second namespace in response to control of the cluster synchronizer.

It should be noted that, the cluster synchronizer may also synchronize the service information to the master node.

In a possible implementation, the traffic proxy is configured to manage a plurality of managed clusters of the target tenant; and when each of the plurality of managed clusters includes the target service located in the first namespace, the traffic proxy is configured to perform service governance on the target service in the plurality of managed clusters based on the service information, the traffic monitoring rule, and the target monitoring rule.

In a possible implementation, the traffic monitoring rule includes a configuration for a listener resource. For example, the configuration for the listener resource indicates at least a listener corresponding to the traffic proxy.

In a possible implementation, the traffic processing rule includes a configuration for a route resource. For example, the configuration for the route resource indicates at least a rule for routing to the service instance of the target service.

In a possible implementation, performing service governance on the target service based on the service information, the traffic monitoring rule, and the target monitoring rule includes: based on the service information, the traffic monitoring rule, and the target monitoring rule, forwarding a request entering the gateway to the target service, and/or forwarding, through the gateway, a request sent by the target service to the outside or another managed cluster of the target tenant.

According to a second aspect, an embodiment of this application provides a service governance apparatus. The service governance apparatus includes several modules, and the modules are configured to perform steps in the service governance method provided in the first aspect of embodiments of this application. Division of the modules is not limited herein. For specific functions performed by the modules of the service governance apparatus and beneficial effects achieved by the modules, refer to functions of the steps in the service governance method provided in the first aspect of embodiments of this application. Details are not described herein again.

For example, the service governance apparatus is used in a master node, where the master node manages virtual private clouds of a plurality of tenants, a cluster is deployed in the virtual private cloud, and a service is deployed in the cluster; the master node manages a managed cluster of a target tenant in the plurality of tenants, and a target service is deployed in the managed cluster; and the apparatus includes:
a service information determining module, configured to determine service information corresponding to the target tenant, where the service information indicates information about a service instance of the target service in the managed cluster;
a gateway creation module, configured to create a gateway corresponding to the target tenant, where the gateway includes a traffic monitoring rule;
a rule determining module, configured to determine a traffic processing rule corresponding to the target service, where the traffic processing rule is associated with a target monitoring rule in the traffic monitoring rule; and
a delivery module, configured to send the service information, the target monitoring rule, and the traffic processing rule to a traffic proxy in a virtual private cloud of the target tenant, where the traffic proxy is configured to perform service governance on the target service based on the service information, the traffic monitoring rule, and the target monitoring rule.

In a possible implementation, the target service is located in a first namespace of the managed cluster; the target service is located in a second namespace of the master node; and when managed clusters of different target tenants include the target service located in the first namespace, second namespaces that are of the master node and in which the target service of different target tenants is located are different.

In a possible implementation, the apparatus further includes:
a mapping module, configured to create the second namespace, and map the target service to the second namespace. For example, information that is in the service information and that is located in the first namespace is mapped to the second namespace. It should be noted that, a cluster synchronizer may also synchronize the service information to the master node.

In a possible implementation, the mapping module is configured to install a cluster synchronizer in the managed cluster of the target tenant; and create the second namespace in response to control of the cluster synchronizer.

In a possible implementation, the traffic proxy is configured to manage a plurality of managed clusters of the target tenant; and when each of the plurality of managed clusters includes the target service located in the first namespace, the traffic proxy is configured to perform service governance on the target service in the plurality of managed clusters based on the service information, the traffic monitoring rule, and the target monitoring rule.

In a possible implementation, the traffic monitoring rule includes a configuration for a listener resource. For example, the configuration for the listener resource indicates at least a listener corresponding to the traffic proxy.

In a possible implementation, the traffic processing rule includes a configuration for a route resource. For example, the configuration for the route resource indicates at least a rule for routing to the service instance of the target service.

In a possible implementation, the traffic proxy is configured to: based on the service information, the traffic monitoring rule, and the target monitoring rule, forward a request entering the gateway to the target service, and/or forward, through the gateway, a request sent by the target service to the outside or another managed cluster of the target tenant.

According to a third aspect, an embodiment of this application provides a service governance apparatus, including: at least one memory, configured to store a program; and at least one processor, configured to execute the program stored in the memory. When the program stored in the memory is executed, the processor is configured to perform the method provided in the first aspect.

According to a fourth aspect, an embodiment of this application provides a service governance apparatus. The apparatus runs computer program instructions, to perform the method provided in the first aspect. For example, the apparatus may be a chip or a processor.

In an example, the apparatus may include a processor. The processor may be coupled to a memory, read instructions in the memory, and perform, according to the instructions, the method provided in the first aspect. The memory may be integrated into a chip or a processor, or may be independent of the chip or the processor.

According to a fifth aspect, an embodiment of this application provides a computer storage medium. The computer storage medium stores instructions, and when the instructions are run on a computer, the computer is caused to perform the method provided in the first aspect.

According to a sixth aspect, an embodiment of this application provides a computer program product including instructions. When the instructions are run on a computer, the computer is caused to perform the method provided in the first aspect.

### BRIEF DESCRIPTION OF DRAWINGS

FIG. 1a is a diagram of a scenario with a single control plane and a plurality of data planes according to a related technology;
FIG. 1b is a diagram of a scenario with a plurality of control planes and a plurality of data planes according to a related technology;
FIG. 2 is a diagram of an architecture of a service system according to an embodiment of this application;
FIG. 3 is a schematic flowchart of a service governance method according to an embodiment of this application;
FIG. 4a is a diagram of a working principle of an Envoy according to an embodiment of this application;
FIG. 4b is a diagram of a scenario of request processing for a single tenant in the method provided in FIG. 3;
FIG. 4c is a diagram 1 of a scenario of request processing for different tenants in the method provided in FIG. 3;
FIG. 4d is a diagram 2 of a scenario of request processing for different tenants in the method provided in FIG. 3;
FIG. 4e is a diagram of a scenario of the method provided in FIG. 3;
FIG. 5 is a schematic flowchart of step 302 in FIG. 3;
FIG. 6a is a diagram of a scenario of request processing for different tenants in the method provided in FIG. 5;
FIG. 6b is a diagram of a scenario of request processing for different tenants in the method provided in FIG. 5;
FIG. 7 is a diagram of an example of a scenario of a service governance method according to an embodiment of this application;
FIG. 8 is a diagram of an example of a structure of a service governance apparatus according to an embodiment of this application;
FIG. 9 is a diagram of a structure of a computing device according to an embodiment of this application;
FIG. 10 is a diagram of a structure of a computing device cluster according to an embodiment of this application; and
FIG. 11 is a diagram of the computing device cluster provided in FIG. 10.

### DESCRIPTION OF EMBODIMENTS

To make objectives, technical solutions, and advantages of embodiments of this application clearer, the following describes technical solutions in embodiments of this application with reference to accompanying drawings.

In descriptions of embodiments of this application, a term like "example", "for example", or "for instance" are used to represent giving an example, an illustration, or a description. Any embodiment or design solution described as "example", "for example", or "for instance" in embodiments of this application should not be interpreted as being more preferred or advantageous than another embodiment or design solution. Specifically, use of the term like "example", "for example", or "for instance" is intended to present a related concept in a specific manner.

In the descriptions of embodiments of this application, the term "and/or" is only an association relationship for describing associated objects, and indicates that three relationships may exist. For example, A and/or B may indicate: Only A exists, only B exists, and both A and B exist. In addition, unless otherwise specified, the term "a plurality of" means two or more. For example, a plurality of systems mean two or more systems, and a plurality of terminals mean two or more terminals.

In addition, terms "first" and "second" are only intended for description, and shall not be understood as an indication or implication of relative importance or an implicit indication of an indicated technical feature. Therefore, a feature limited by "first" or "second" may explicitly or implicitly include one or more features. The terms "include", "comprise", "have", and their variants all mean "include but are not limited to", unless otherwise specifically emphasized in another manner.

The following explains and describes some terms in embodiments. It should be noted that, the explanations are for ease of understanding by a person skilled in the art, and are not intended to limit the protection scope claimed by this application.

Application programming interface (Application Programming Interface, API): mainly aims to provide an application and a developer with a capability of accessing a group of routines, without accessing source code or understanding details of an internal working mechanism.

Microservice (microservice): a small service including a single application. Each microservice has its own process, and can communicate with another microservice through a lightweight communication mechanism, for example, an application programming interface (application programming interface, API) based on a hypertext transfer protocol (hypertext transfer protocol, HTTP).

Microservice architecture (microservice architecture): a service-oriented architecture (service-oriented architecture, SOA), which splits a complex system into a plurality of small services or applications. The small services or applications may be referred to as microservices. Each microservice is responsible for implementing one piece of independent service logic. The microservice is built based on a service function and may be deployed independently. The microservices are dependent on each other to provide a series of functions. The microservice is easy to understand and modify, and provides language and framework selection flexible.

Service governance: processes a service call relationship in a distributed service framework. Service governance may be specifically divided into the following levels: service registration and discovery, load balance, fault handling and recovery (rate limiting, circuit breaking, timeout, and retry), gray release, service tracing, and the like. In a microservice architecture, service governance, also referred to as SOA governance (service-oriented architecture governance, SOA governance), is a process used to manage use and implementation of the microservice architecture.

Virtual private cloud (Virtual Private Cloud, VPC): a set of virtual network environments that are constructed for instances, logically isolated, and configured and managed by a user, improving security of user resources and simplifying user network deployment. The user may select an IP address range, create a plurality of subnets, customize a security group, and configure a route table and a gateway in the VPC, so that the user can manage and configure a network conveniently, and modify the network securely and rapidly.

Traffic: an amount of data transmitted on a network. Simply, the traffic is a transmission amount of data on the network. A size of the network traffic may be measured by a quantity of data packets or a size of data.

North-south traffic: traffic entering a VPC from a public network and traffic leaving the VPC for the public network. The north-south traffic is mainly traffic across a VPC border, including: an external client accessing a service inside the VPC and a service inside the VPC accessing an external service or application.

East-west traffic: traffic inside a VPC. The east-west traffic is mainly traffic between different regions in a same VPC, for example, traffic between different subnets, or traffic between different microservices.

token: means a token (temporary) in computer identity authentication, and is a marker in lexical analysis. Generally, the token is used for invitation and system login.

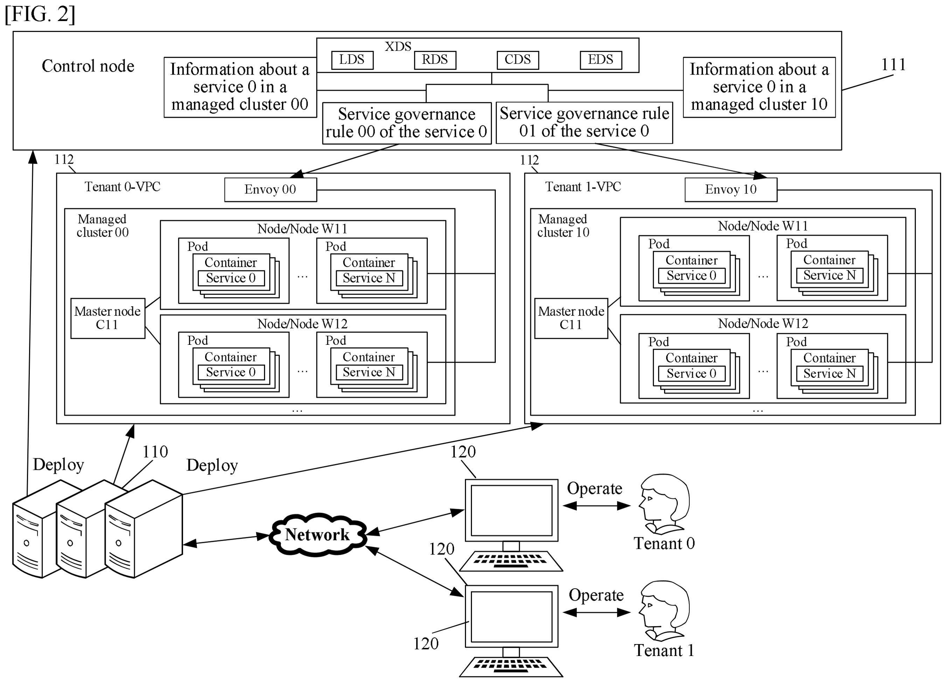

Kubernetes (k8s) cluster: an open-source platform that automates a container operation, and provides, based on a docker technology, a containerized application with a series of complete functions, such as deployment and running, resource scheduling, service discovery, and dynamic scaling, thereby improving convenience of large-scale container cluster management. The k8s cluster is a distributed cluster including a master node (Master-Node) and a node (Node). The k8s cluster includes a Master-Node and a node (Node). The Master-Node may be a hardware server, or may be embedded in a virtualization environment. For example, the master node in this solution may be a virtual machine executed on a hardware server including one or more other virtual machines. This is similar for the node (Node). Details are not described again. For example, as shown in FIG. 2, a k8s cluster includes one or more Master-Nodes C11 and N nodes (Node): W11, ..., and W1N.

Apiserver: an api gateway of a control plane of a k8s cluster.

Container network interface (Container Network Interface, CNI): an interface that abstracts implementation of a k8s network operation.

Container (Container): a virtualization technology in a computer operating system. The technology enables a process to run in an independent and isolated environment (including an independent file system, a namespace, a resource view, and the like), to simplify a software deployment procedure, enhance software portability and security, and improve system resource utilization. The container technology is widely applied to service-oriented scenarios in the cloud computing field.

Pod (Pod): a minimum deployable compute unit that can be created and managed in Kubernetes. The Pod includes a group of (one or more) containers that share storage, a network, and a declaration about how to run the containers. Content in the Pod is always collocated and scheduled together, running in a shared context. The Pod is modeled as an application-specific "logical host" that includes one or more tightly coupled application containers.

Endpoint: a resource object that is in a k8s cluster and that is for recording access addresses of all pods corresponding to a service. The endpoint may be understood as a specific "application instance."

EndpointSlices (EndpointSlices): provide a scalable and extensible alternative solution to an Endpoint API. An EndpointSlice traces an IP address of a Pod, a port, readiness, and topology information of a service.

Service mesh (service mesh) technology: Discovery and routing between services are not directly based on IP addresses any longer, but are based on metadata information (including but not limited to service names, versions, and the like) of the services.

Istio: an open platform that is for service governance and that is in a form of a Service Mesh. The "form of the Service Mesh" may be understood as that the Istio implements the Service Mesh. A "service" may be simply understood as a microservice or a single application that is an object governed by the Istio. "Governance" is a function provided by the Istio, and includes traffic management, security, and observability of services. Traffic management: The Istio may control called traffic and API calling between services based on simple traffic routing rule configuration. Security: The Istio manages an authentication mechanism, a channel encryption service, and access authorization for communication between services, to ensure security of the communication between the services. In addition, in all the functions, an application does not need to be changed. Observability: The Istio has powerful link tracing, monitoring, and logging capabilities, to facilitate awareness of a service running status, and detect and resolve problems.

Envoy: an open-source edge and service proxy designed for cloud-native applications. The Envoy proxy may forward traffic to an external website or a docker container, and may also execute path-based routing to control a traffic destination. Istio includes a control plane and a data plane. The data plane includes an Envoy proxy, and provides functions of service discovery, traffic management for intelligent routing, and elasticity. The Envoy proxy is a high-performance proxy developed in C++, and is used to mediate inbound and outbound traffic of all services in a service mesh.

Cluster: is a group of logically similar upstream hosts connected to an Envoy, may also be understood as an "application cluster", and corresponds to one or more Endpoints that provide a same service. The Cluster is similar to a concept of a service in Kubernetes. To be specific, one Kubernetes service corresponds to one or more Pods that are started by using a same image and that provide a same service. The Envoy may determine a health status of an Endpoint (cluster member) via active health checking. How the Envoy routes a request to the Endpoint (cluster member) is determined according to a load balancing policy. In embodiments of this application, for ease of description and differentiation, the Cluster may be referred to as an application cluster.

Listener (listener): is a service (program) listener, and is a named network location (for example, a port or a unix domain socket) that can be connected to by a downstream client. An Envoy exposes one or more listeners connected to a downstream host, and may start any quantity of Listeners (listener). Each listener is independently configured with a certain quantity of (L3/L4) network filters.

Route: for determining a specific Cluster to which data is sent for processing.

Filter (filter): adds more integrated functions without changing an essential function of an Envoy. Currently, the Envoy has included a plurality of listener filters (Listener filter).

Httproute: represents an HTTP routing rule, for example, a requested domain name, a rule with which a path complies, and a specific Cluster to which forwarding is performed.

XDS (X Discovery Service): a communication protocol between a control plane and a data plane of Istio. Specifically, in an Istio architecture, the XDS protocol provides a standard control plane specification, and transfers information to the data plane accordingly. X indicates that the XDS is not a specific protocol but a general name of a group of service discovery protocols that are based on different data sources. It may also be understood that, the XDS is a general name of a series of services, mainly including a listener discovery service LDS (Listener DS), a route discovery service RDS (Route DS), a cluster discovery service CDS (Cluster DS), an endpoint discovery service EDS (Endpoint DS), and the like. An API of the XDS communication protocol is proposed by an Envoy, to implement dynamic configuration of the Envoy to cope with a changing infrastructure. In the Envoy, the XDS is referred to as a data plane API and serves as a communication protocol between the control plane and the data plane. In addition, APIs may also be used by other proxies in specific scenarios. Through the APIs, the Envoy may dynamically obtain, from the control plane, configurations of resources such as a Cluster (application cluster), an Endpoint (cluster member), a Listener (listener), and a Route (route).

Gateway (Gateway): encapsulates a plurality of microservices inside a service system, and provides a unified access entry. All requests that enter and leave a cluster like a k8s cluster need to pass through the gateway, to implement unified management and monitoring of cross-cluster requests. In addition, the gateway provides functions such as service security authentication, request authentication, and supporting a plurality of communication protocols and packet formats.

Namespace (namespace): a form of code organization used by many programming languages. Namespaces are used for classification to distinguish between different code functions and avoid a conflict resulted from a same variable name in different code when different code snippets (usually, different people collaboratively work or call existing code snippets) are simultaneously used.

Classless inter-domain routing (CIDR, Classless Inter-Domain Routing): a method for creating additional addresses on the Internet. The addresses are provided to a Internet service provider (ISP) and then allocated by the ISP to a customer. The CIDR centralizes routes, so that one IP address represents thousands of IP addresses served by major backbone providers, thereby reducing a burden on Internet routers. Without the CIDR, the routers cannot support an increase of Internet websites. The CIDR uses a variable network ID of 13 to 27 bits, rather than fixed 7, 14, and 21 bits used by network IDs of classes A, B, and C.

In a related technology, Istio controls traffic of a cluster by deploying a Gateway at an edge of the cluster.

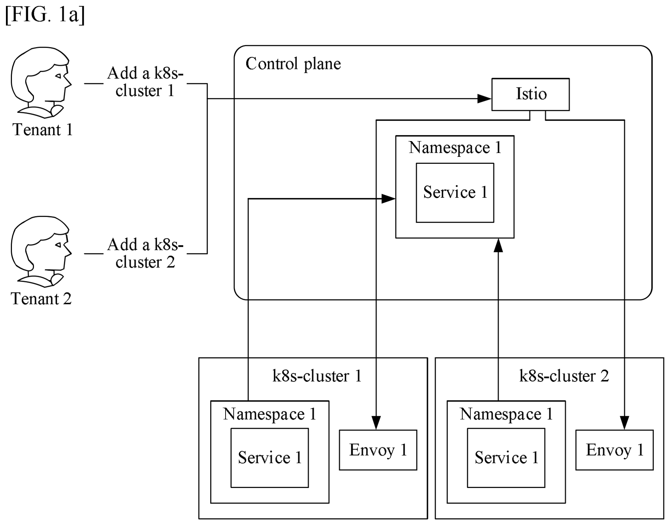

In a possible case, a single control plane and a plurality of data planes may be deployed. An example in which the cluster is a k8s cluster is used. As shown in FIG. 1a, one Envoy is deployed in one k8s cluster (which may also be referred to as a k8s-cluster), and all k8s clusters share one Istio control plane. As a unique entry for delivering a flow control rule, the single control plane checks services (services) in all the k8s clusters. Envoys of data planes of all the k8s clusters are connected to the control plane, to obtain information generated according to an XDS.

In a solution that is of the Istio and that has the single control plane and the plurality of data planes, the Istio considers that same services in same namespaces in different k8s clusters are a same service. Even if two k8s clusters belong to different tenants, isolation is not performed, and a service governance solution cannot be independently formulated for a specific tenant. For example, as shown in FIG. 1a, it is assumed that the Istio control plane manages a k8s-cluster 1 of a tenant 1 and a k8s-cluster 2 of a tenant 2; the k8s-cluster 1 includes a namespace namespace 1, and the namespace 1 includes a service service 1; and the k8s-cluster 2 includes a namespace namespace 1, and the namespace 1 includes a service service 1. In this case, the Istio considers that the service service 1 of the tenant 1 and the service service 1 of the tenant 2 are a same service.

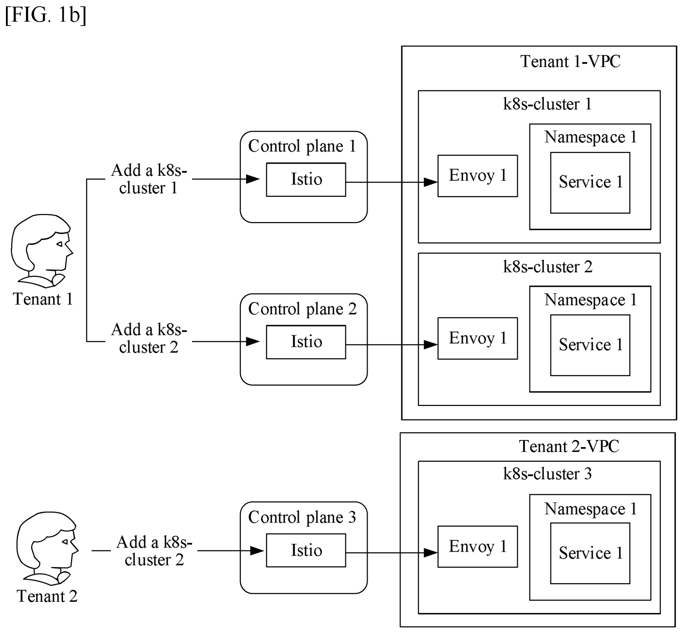

In another possible case, a plurality of control planes and a plurality of data planes may be deployed. An example in which the cluster is a k8s cluster is used. As shown in FIG. 1b, one Envoy is deployed in one k8s cluster, each of all k8s cluster has one independent Istio control plane, and each control plane is deployed on a different node. Services of different k8s clusters belonging to different tenants can be isolated. However, the Istio does not proactively enable service access between the k8s clusters, and a user needs to proactively register service entries for mutual access between the k8s clusters. For example, as shown in FIG. 1b, it is assumed that a control plane 1 of the Istio manages a k8s-cluster 1 of a tenant 1, and a control plane 2 manages a k8s-cluster 2 of the tenant 1; the k8s-cluster 1 includes a namespace namespace 1, and the namespace 1 includes a service service 1; and the k8s-cluster 2 includes a namespace namespace 1, and the namespace 1 includes a service service 1. In this case, the Istio considers that the service service 1 of the k8s-cluster 1 of the tenant 1 and the service service 1 of the k8s-cluster 2 are different services. A control plane 3 manages a k8s-cluster 3 of a tenant 2, the k8s-cluster 3 includes a namespace namespace 1, and the namespace 1 includes a service service 1. In this case, the Istio considers that the service service 1 of the tenant 1 and the service service 1 of the tenant 2 are different services.

In a solution that is of the Istio and that has the plurality of control planes and the plurality of data planes, although services in different k8s clusters may be isolated, one Istio control plane needs to be allocated to each k8s cluster, consuming a large quantity of resources. When a tenant has a plurality of k8s clusters, same services in same namespaces in the plurality of k8s clusters of the tenant are considered as different services. As a result, service governance cannot be performed at a tenant granularity.

To facilitate understanding of the technical solutions provided in embodiments of this application, a service system to which a service governance method provided in embodiments of this application may be applied is first described. FIG. 2 is a diagram of an example of an architecture of a service system according to an embodiment of this application. This embodiment of this application provides the diagram of the architecture of the system shown in FIG. 2, where the service governance method may be applied to the system. As shown in FIG. 2, the service system includes a plurality of computing devices 110 and a plurality of terminal devices 120.

The terminal device 120 may be but is not limited to a personal computer, a notebook computer, a smartphone, a tablet computer, and a portable wearable device. An example embodiment of the terminal device in this solution includes but is not limited to an electronic device that carries IOS, Android, Windows, Harmony OS (Harmony OS), or another operating system. A type of the electronic device is not specifically limited in embodiments of this application.

The computing device 110 may be a terminal, a computer, or a server. In an example, the server in this solution may be configured to provide a cloud service, and may be a server or a hyper terminal that can establish a communication connection to another device and can provide a computing function and/or a storage function for the another device. The server in this solution may be a hardware server, and a virtual server may be deployed on the hardware server.

The terminal device 120 communicates with the plurality of computing devices 110 through a network.

A service governance system is deployed on the plurality of computing devices 110, and the service governance system includes one master node 111 and virtual private clouds (VPCs) 112 of N tenants. For example, FIG. 2 shows VPCs of two tenants, which are denoted as a tenant 1-VPC and a tenant 2-VPC for ease of description and differentiation.

A cluster, for example, a k8s cluster, is deployed in the VPC 112. The cluster includes a plurality of nodes (Node), and the plurality of nodes are classified into a master node (Master-Node) and a node (Node). The master node (Master-Node) may be a hardware server, or may be embedded in a virtualization environment. For example, the master node in this solution may be a virtual machine executed on a hardware server including one or more other virtual machines. This is similar for the node (Node). Details are not described again. For example, as shown in FIG. 2, a cluster includes one master node (Master-Node) C11 and N nodes (Node): W11, , and W1N....

Each node (Node) includes one or more pods. Each pod may include one or more containers (containers). For example, as shown in FIG. 2, the pod may be a Pod in a k8s cluster. One service may be deployed in each pod, and a same service or different services may be deployed in a pod of each node (Node). For example, as shown in FIG. 2, N+1 services (a service 0 to a service N) are deployed in a plurality of Pods of the node W11. Each service may be set or run in several pods. A service may implement one piece of independent service logic, and may be for example, a microservice. A plurality of services may provide corresponding service functions based on a relationship of calling or being called. A service may generate an access request to call another service or application. The service may send a request to the outside or receive a request from the outside.

It should be noted that, an Istio control plane is deployed on the master node 111. The control plane may be understood as a process running on the master node 111, or may be a program or a module that has a control and management function and that runs on the master node 111.

To resolve the foregoing problems, a technical idea of the service governance method provided in embodiments of this application is as follows.

A single control plane is deployed on the master node 111, and the single control plane performs service isolation at a tenant level. In this way, same services of different tenants are considered as different services. During service governance, for a same service, different tenants may independently configure service governance rules according to actual requirements of the tenants. In this way, different tenants may have different service governance rules for a same service, and the service governance rules of the tenants are delivered to traffic proxies of the tenants, such as Envoys, so that logical multi-tenancy with single control plane is implemented, and resource deployment can be resolved to some extent.

For example, as shown in FIG. 2, it is assumed that a VPC of a tenant 0 is denoted as a tenant 0-VPC, a VPC of a tenant 1 is denoted as a tenant 1-VPC, the tenant 0-VPC includes an Envoy 00 and a managed cluster 00, and the tenant 1-VPC includes an Envoy 10 and a managed cluster 10. Services service 0, service 1, ..., and service N are deployed in the managed cluster 00, and traffic management is performed by the Envoy 00. Services service 0, service 1, ..., and service N are deployed in the managed cluster 10, and traffic management is performed by the Envoy 10. The tenant 0 and the tenant 1 publish the services 0 by operating the terminal devices 120. The Istio control plane obtains, for the tenant 0, information about the service 0 in the managed cluster 00, configures a service governance rule 00 of the service 0 according to an XDS, and delivers the service governance rule 00 to the Envoy 00. The Istio control plane obtains, for the tenant 1, information about the service 0 in the managed cluster 10, configures a service governance rule 01 of the service 0 according to the XDS, and delivers the service governance rule 01 to the Envoy 10.

In some possible implementations, an example in which a control plane is the Istio control plane and a traffic proxy is an Envoy is used. The control plane senses information about the XDS for a service, and delivers the information about the XDS only to an Envoy corresponding to a tenant, to implement service governance. A manner in which the control plane delivers the information about the XDS only to the Envoy corresponding to the tenant may be as follows: The control plane manages addresses of Envoys in a unified manner, and creates an Envoy exclusive to each tenant in a corresponding VPC 112 as required, where addresses of Envoys of different tenants are different. In addition, the control plane creates a Gateway exclusive to each tenant, where the Gateway is associated with the Envoy of the tenant. In this way, the information about the XDS of the corresponding service is delivered only to the Envoy of the tenant associated with the Gateway of the tenant.

In addition, in this embodiment of this application, a service governance rule may be understood as a configuration for a resource in an Envoy. The Envoy has many resources. The resource is an abstract concept. The so-called resource herein is an entity that is created by the Envoy based on a related configuration and that has a specific function or purpose. In addition, the resource may also be understood as a custom resource object, which is created by an administrator through an interface (for example, an Istioctl tool provided by Istio or a graphical user interface provided by a third party) provided by a control plane component of a service mesh, to implement complex service governance such as dynamic routing, circuit breaking, rate limiting, and call chain tracing.

In this embodiment of this application, the master node 111 can manage, by using the control plane component, traffic between all services deployed in a cluster in a unified manner. Specifically, a service governance rule is configured for the control plane by creating a custom resource definition (Custom Resource Definition, CRD) resource object on the master node 111 on which the control plane is located, to govern a data plane (an Envoy). The CRD resource object can define the service governance rule of the service mesh. The control plane of the service mesh delivers the service governance rule defined by the CRD resource object to the data plane (the Envoy).

For example, the Envoy has four most essential resources: a Listener, a Router, a Cluster, and a Filter. Correspondingly, the service governance rule includes a configuration parameter of the XDS.

The Listener is a listening port opened by the Envoy, and is configured to receive a connection from a Downstream (client). The Envoy may support a plurality of Listeners. Almost all configurations between the plurality of Listeners are isolated. An essential configuration of the Listener includes a listening address, a Filter chain, and the like. The Filter chain may be understood as a plurality of filters in sequence. The Filter chain is for a same listening address. After a request is intercepted, the intercepted request is processed based on the sequence of the filters in the Filter chain.

A configuration/resource discovery service corresponding to the Listener is referred to as an LDS. The LDS is a basis for the Envoy to work normally. Without the LDS, the Envoy cannot implement port listening, and all other XDS services are unavailable. For the listener discovery service (LDS), during running, the Envoy may discover all Listeners, including all filter stacks such as L3 and L4 filters; and perform various proxy work such as authentication, a transmission control protocol (TCP, Transmission Control Protocol) proxy, and an HTTP proxy.

For example, the service governance rule includes a configuration parameter of the LDS. The configuration parameter of the LDS may include:
1. Listener name: Each listener has a unique name, which is for identifying and referencing the listener. The listener name corresponds to a listener name field in a Gateway.
2. Listening address and port: specify an IP address and a port that are for receiving an incoming request by the listener. The listening address and port correspond to address and port fields in the Gateway, which are for describing an address of the Envoy.
3. The Filter chain performs various processing and conversion on the incoming request.

The Cluster is an abstraction for an upstream service. In the Envoy, each Upstream (upstream service) is abstracted as one cluster. The Cluster includes a connection pool, a timeout interval, an Endpoints address, a port, a type (the type determines a method in which the Envoy obtains an Endpoint that can be accessed by the Cluster), and the like of the service.

A configuration/resource discovery service corresponding to the Cluster is referred to as a CDS. For the cluster discovery service (CDS), the Envoy uses the CDS to discover an upstream Cluster during routing. The Envoy usually adds, updates, and deletes a Cluster. During routing of an HTTP request, Cluster information may be added to an HTTP request header, to forward the request.

For example, the service governance rule includes a configuration parameter of the CDS. The configuration parameter of the CDS may include:
1. Cluster name: a unique identifier of a Cluster.
2. Protocol type: specifies a protocol type used by the Cluster, for example, HTTP or TCP.
3. Policy: a health check policy, a connection policy, and a load balance policy for a backend node (Endpoint).
4. Backend node (Endpoint): specifies an address, a port, and a weight of each backend node (Endpoint) in the cluster (Cluster). The Envoy uses the information to perform load balance on a request.

Another service closely related to the CDS is referred to as an EDS. A configuration/resource discovery service corresponding to an Endpoint is referred to as an EDS. The Envoy may dynamically obtain an upstream Endpoint by using the EDS.

For example, the service governance rule includes a configuration parameter of the EDS. The configuration parameter of the EDS may include:
1. Cluster name (Cluster_name): specifies a name of a Cluster that needs to be configured and managed.
2. Endpoint information (Endpoints): defines information such as an address, a port, and a weight of a backend node in the cluster.

It should be noted that, the CDS focuses on configuration and management of information about the entire cluster, and the EDS focuses on a specific address and a health status of a backend node in a specified cluster. The CDS and the EDS may cooperate with each other. The CDS is responsible for managing and configuring the cluster, and the EDS is responsible for providing information about the backend node, for the Envoy to perform routing and load balance. Therefore, the CDS does not include specific information of the EDS. However, the cluster name in the EDS is usually referenced in a configuration of the CDS, to specify the backend node to be managed.

The Router is a bridge between an upstream and a downstream, and may be understood as a set of rules and resources that bridge the Listener and a backend service. In the Envoy, the Listener may receive the connection from the Downstream (client), the Cluster may send traffic to a specific upstream service, and the Router determines a specific Cluster to which the Listener should send data after the Router receives the downstream connection and the data. The router defines a data distribution rule. Currently, the Envoy supports routing of a plurality of protocols, such as HTTP and TCP.

A configuration/resource discovery service corresponding to the Router is referred to as an RDS. A most essential configuration of the Router includes a request matching rule and a rule for routing to the Cluster, and may also include retry, traffic offloading, rate limiting, and the like. For example, the route discovery service (RDS) may be for obtaining, by the Envoy, a complete route configuration for an HTTP connection manager filter, for example, an HTTP header modification.

For example, the service governance rule includes a configuration parameter of the RDS. The configuration parameter of the RDS may include:
1. Route name (name): a unique name for identifying and referencing a route.
2. Route configuration: a rule for processing a request, where the processing may include matching and routing to the Cluster. For example, the route configuration may correspond to Match, BackendRef, and Filter in an Httproute. Match is for specifying a request matching condition. Request matching may be performed by using a plurality of conditions, such as a request method, a target path, and a request header. The Match field allows to configure a plurality of matching rules. Filter is for a rule for routing the request. BackendRef is for specifying a backend service to which the request should be routed. BackendRef specifies a name or another identifier of the backend service, and may be for configuring a load balance algorithm (indicating a load balance policy for an Endpoint), and a TLS setting, and the like.

Popularly, the Filter is a plug-in. With a Filter mechanism, the Envoy provides powerful scalability. In the Envoy, many essential functions are implemented by using the Filter. For example, HTTP traffic governance and service governance depend on two plug-ins, that is, HttpConnectionManager (responsible for protocol parsing) and Router (responsible for traffic distribution). By using the Filter mechanism, the Envoy may theoretically support any protocol and perform conversion between protocols, and may modify and customize request traffic in an all-round manner.

The Filter does not have a dedicated XDS service to discover a configuration. All configurations of the Filter are embedded in the LDS, the RDS, and the CDS. For example, network filters are configured in the LDS, where the network filters are HTTP connection managers. The configured HTTP filters are traversed to execute logic in the filters one by one. The HTTP filters correspond to configuration information of RDS filters. The RDS filters include two parts: a matching condition of Match and a specific corresponding CDS specified by a route. Load balance, rate limiting, and circuit breaking belong to a CDS level.

It should be noted that, during specific implementation, for a published service, when the master node 111 discovers that a new service of the XDS is created or a configuration parameter of an old service is changed, the master node 111 pushes a related configuration to the Envoy. After receiving and verifying the related configuration, the Envoy dynamically updates a runtime configuration, uses the new configuration to update a configuration of a related resource, and determines a new service governance rule. For example, a pilot in the Istio and a cluster being a k8s cluster are used as an example. When the pilot discovers that a new service or routing rule is created (by monitoring a specific CRD resource change in the k8s cluster, or discovering a Consul service registration and configuration change), the pilot pushes a related configuration to the Envoy by using Google remote procedure call (Google Remote Procedure Call, gRPC) streaming that has been established between the pilot and the Envoy. After receiving and verifying the related configuration, the Envoy dynamically updates a runtime configuration, uses the new configuration to update a configuration of a related resource, and obtains a new service governance rule.

The following describes in detail a service governance method provided in embodiments of this application with reference to the service system provided above. In this application, an example in which a traffic proxy is an Envoy is used to describe the solutions of this application. A k8s cluster is only used as an example and does not constitute a specific limitation.

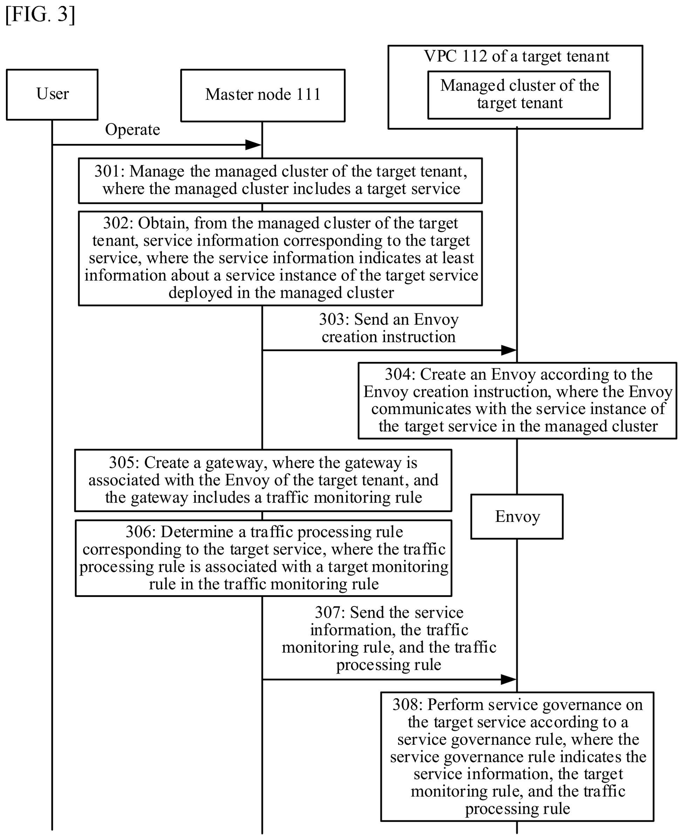

FIG. 3 is a schematic flowchart of a service governance method according to an embodiment of this application. This embodiment may be applied to an electronic device, and may be specifically applied to a server or a general computer.

As shown in FIG. 3, the service governance method provided in this embodiment of this application includes at least the following steps.

Step 301: A master node 111 manages a managed cluster of a target tenant, where the managed cluster includes a target service.

It should be noted that, a control plane component of Istio, for example, a pilot component or a monitoring component, is configured on the master node 111.

In some possible implementations, the master node 111 manages the managed cluster based on an access address of the managed cluster.

For example, a tenant may access a configuration interface by using a terminal device 120, and the terminal device 120 displays a cluster configuration interface. The cluster configuration interface includes an access address that is of a managed cluster and that needs to be configured by a user. For example, the managed cluster has a unified access interface (which is a unique entry for a resource operation externally provided by a cloud native platform), and the access address may be understood as an address of the unified access interface. By using a k8s cluster as an example, an API-Server component is used as a unified access interface for a resource operation. In this case, an address of the unified access interface may include an address of an apiserver of the k8s cluster and a token. Further, in some possible cases, the access address may further include network information (indicating a network of the managed cluster) of the managed cluster. For example, by using the k8s cluster as an example, the network information may include Pod CIDR (a CIDR subnet segment of the k8s cluster), a node ID, and a CNI of the k8s cluster. The tenant performs configuration on the cluster configuration interface, obtains the access address of the managed cluster, and sends the access address to a master node 111. The master node 111 manages the managed cluster. Management may be understood as that the master node 111 has permission to access and manage the managed cluster.

In some possible implementations, a plurality of services are deployed in a cluster, but usually, only a part of the services need service governance. A service that needs service governance is referred to as the target service, and the target service usually needs to be proactively published by the tenant. In some other possible cases, the target service may alternatively be all the services deployed in the cluster.

For example, the tenant may access the configuration interface by using the terminal device 120, and the terminal device 120 displays a service publishing interface. The service publishing interface includes a service that needs to be published and that needs to be configured by the user. During specific implementation, after the master node 111 manages the managed cluster, the master node 111 may view a service deployed in the managed cluster. Correspondingly, the user may view, on the service publishing interface, all services deployed in the managed cluster, and then select the target service for publishing. The tenant publishes the target service on the service publishing interface, to obtain information about the target service and then send the information about the target service to the master node 111.

Step 302: The master node 111 obtains, from the managed cluster of the target tenant, service information corresponding to the target service, where the service information indicates at least information about a service instance of the target service deployed in the managed cluster.

The service information may include an identifier of the target service and the information about the service instance of the target service. For example, a cluster includes a node, a Pod is deployed on the node, a service is deployed in the Pod, and the Pod associated with the service is managed by an Endpoint or an EndpointSlice. Correspondingly, the information about the service instance of the target service may indicate a Pod associated with the target service, and an Endpoint or an EndpointSlice associated with the target service; and may further include a network address of the Pod associated with the target service, and the like. For example, the network address of the Pod may include an IP address and a port number of the Pod. The identifier of the target service may be understood as an identifier used by the cluster to distinguish between different services. Usually, an identifier of a service may be a logical address or description information, and is not a network address of a specific microservice or application, or is not a network address of a pod that runs the microservice or application. The identifier of the service may be for describing or identifying the service. Alternatively, the identifier of the service is for describing or representing a service requested by an access request in which the identifier is located. In an example, the identifier of the service may include a service name, a service version number, and/or the like. In an example, the identifier of the service may be preset information claiming or indicating that the access request needs service governance.

In some possible implementations, step 302 may include the following content: The master node 111 sends a synchronization instruction to the managed cluster of the target tenant; the managed cluster of the target tenant sends the service information of the target service to the master node 111; and the master node 111 receives the service information of the target service.

It should be noted that, the synchronization instruction is for requesting the managed cluster to synchronize the information related to the target service to the master node 111. The synchronization instruction may include the access address of the managed cluster of the target tenant and the identifier of the target service.

Step 303: The master node 111 sends an Envoy creation instruction to a VPC 112 of the target tenant.

In actual application, once the access address of the managed cluster is registered with the master node 111, the master node 111 may create an Envoy in the VPC 112 of the target tenant. For example, the master node 111 includes a configuration center. After the access address of the managed cluster is added to the configuration center, the managed cluster may synchronize some management information of the managed cluster to the configuration center. When the master node 111 detects, from the configuration center, that the managed cluster of the target tenant needs to be managed, the master node 111 sends the Envoy creation instruction to the VPC 112 of the target tenant.

Step 304: The VPC 112 of the target tenant creates an Envoy according to the Envoy creation instruction, where the Envoy communicates with the service instance of the target service in the managed cluster.

During specific implementation, a cluster controller may be deployed on the master node 111. For the target tenant, the cluster controller creates a virtual machine in the virtual private cloud (VPC 112) of the target tenant, deploys the Envoy in the virtual machine, and allocates an IP to the virtual machine. It should be noted that, if IPs of a plurality of virtual machines of the target tenant are the same, SocketOption is bound to each of the plurality of virtual machines for differentiation, to ensure that a plurality of Envoys of the target tenant are different. In addition, the Envoy may be deployed in the managed cluster, or may be deployed outside the managed cluster. This is not specifically limited in embodiments of this application. Specifically, the Envoy may be designed according to an actual requirement.

Subsequently, the master node 111 may determine the network information of the managed cluster of the target tenant based on the access address of the managed cluster of the target tenant. For example, when the managed cluster is a k8s cluster, the network information may include pod CIDR, a node IP, and a CNI. Then, the master node 111 establishes, based on the network information of the managed cluster, a channel between the Envoy in the VPC 112 of the target tenant and the service instance (the service instance may be a pod when the cluster is the k8s cluster) of the managed cluster. For example, based on the CNI of the managed cluster, the cluster controller adds a route to a node in the managed cluster or adds a virtual extensible local area network (Virtual Extensible Local Area Network, VXLAN) in the virtual machine in which the Envoy in the VPC 112 of the target tenant is located, to open a data channel between the Envoy and the service instance (for example, the Pod) in the managed cluster.

The master node 111 may determine, based on the access address of the managed cluster of the target tenant, the network information of the managed cluster of the target tenant in a plurality of manners.

Implementation 1: If the access address includes the network information of the managed cluster, the master node 111 parses the access address to obtain the network information of the managed cluster.

Implementation 2: The master node 111 may access the managed cluster based on the access address of the managed cluster, to obtain the network information of the managed cluster. For example, the master node 111 includes the configuration center, and the configuration center stores various types of configuration information of the managed cluster. In this case, the master node 111 may access, based on the access address of the managed cluster, the configuration information of the managed cluster from the configuration center, to obtain the network information of the managed cluster.

Step 305: The master node 111 creates a gateway, where the gateway is associated with the Envoy of the target tenant, and the gateway includes a traffic monitoring rule.

In this embodiment of this application, the traffic monitoring rule is for describing some rules for monitoring traffic, for example, a listening address and a request processing rule. The listening address is for describing an address of the Envoy, which is generally an IP address and a port. The listening address is configured with a domain name. After receiving a request, the gateway needs to perform matching with the domain name. If the matching successes, the request is considered as a request that needs to be processed by the Envoy. The request processing rule is for describing a method for processing a request, for example, some initial processing such as protocol conversion. It should be noted that, the traffic monitoring rule may be understood as a configuration for a listener (Listener) resource. During specific implementation, a listener (Listener) is configured in the gateway, and a listening address and a Filter chain (which is for processing a request, and may not exist in some possible cases) are configured in the listener. It should be noted that, the Envoy may be associated with the gateway by default, for example, all Envoys are associated with the gateway; or the Envoy associated with the gateway may be configured by the tenant.

In some possible implementations, the user does not need to perform a configuration, and the master node 111 may create a gateway based on a default gateway configuration.

In some other possible implementations, the user may set a gateway configuration. For example, the tenant may access the configuration interface by using the terminal device 120, and the terminal device 120 displays a gateway creation interface. The gateway creation interface includes configuration parameters that are of a gateway and that needs to be configured by the user, such as a gateway name, a namespace, a listening address, a listening port, a listening protocol, and a host name or a domain name that needs to be listened. The parameters are only used as examples and do not constitute a specific limitation. Specifically, the parameters may be flexibly designed according to an actual requirement, for example, a label and an application or a service (differentiated by using a label) that needs to be forwarded may also be configured, and a security certificate, and a quantity of links may be further included. After performing an operation on the gateway creation interface, the user may send, to the master node 111, an instruction for creating the gateway of the target tenant, where the instruction includes parameter values of the configuration parameters of the gateway. Correspondingly, the master node 111 may create the gateway according to the instruction for creating the gateway of the target tenant.

It should be noted that, if there may be a plurality of managed clusters of the target tenant, and the plurality of managed clusters may be managed by a plurality of Envoys, the gateway of the target tenant is associated with the plurality of Envoys.

For example, the master node 111 includes a gateway controller. The gateway controller may create a loadbalance service for the target tenant. The loadbalance service may run by using a pod, and the IP of the virtual machine in which the Envoy of the target tenant is located is filled in an IP of the pod of the loadbalance service (a service that distributes a request to a plurality of Envoys). When there are the plurality of Envoys, IPs of all the Envoys need to be filled in. In this way, when the loadbalance service of the target tenant is accessed, the Envoy exclusive to the target tenant may be accessed. Then, a Gateway is created, and the Gateway is associated with the loadbalance service of the target tenant, so that the gateway is associated with the Envoy of the target tenant. It should be noted that, there are the plurality of managed clusters of the target tenant, and the plurality of managed clusters are managed by the plurality of Envoys. In this case, the loadbalance service is associated with the plurality of Envoys, so that the gateway is associated with the plurality of Envoys.

Step 306: The master node 111 determines a traffic processing rule corresponding to the target service, where the traffic processing rule is associated with a target monitoring rule in the traffic monitoring rule.

The traffic processing rule may indicate a traffic routing and modification rule, and a routing rule for forwarding traffic to the target service. For example, the traffic processing rule may be understood as a configuration for a route Router. It should be noted that, the configuration for the route Router includes a domain name (which may be a domain name in the gateway, or may be a subdomain name under the domain name in the gateway) associated with the target service, and the domain name is located under a listener (Listener). Therefore, the traffic processing rule is associated with a monitoring rule (referred to as a target monitoring rule in this embodiment of this application) of the listener (Listener). The target monitoring rule is a listening address and Filters in the listener (Listener) that matches the domain name in the traffic processing rule.

In some possible implementations, the user does not need to perform a configuration, and the master node 111 may use a default traffic processing rule as the traffic processing rule of the target service.

In some other possible implementations, the user may set the traffic processing rule. For example, the tenant may access the configuration interface by using the terminal device 120, and the terminal device 120 displays a processing rule configuration interface. The processing rule configuration interface includes the configuration for the route Router. For example, specific parameters that may be configured may be the domain name (which may be the domain name in the gateway, or may be the subdomain name under the domain name in the gateway) associated with the target service, a request filtering, matching, and/or modification rule, a routing rule for forwarding a request to the target service, a load balance algorithm, and the like. For example, the routing rule may be that a v1 version of the target service is accessed by using 90% of traffic, and a v2 version of the target service is accessed by using 10% of traffic; or may be traffic distribution between a primary node and a standby node. By using an example in which the cluster is a k8s cluster, the load balance algorithm indicates a policy for balancing a request to an Endpoint or an EndpointSlice. After the user performs an operation on the processing rule configuration interface, the traffic processing rule configured by the target tenant may be sent to the master node 111.

For example, the processing rule configuration interface is for converting a service resource of the Kubernetes cluster into a Virtual Service resource of the Istio. Virtual Service is an essential configuration of Istio traffic governance. VirtualService defines a group of traffic rules for the target service, represents a virtual service in a form, and forwards traffic that meets a condition to a corresponding service backend. The service backend may be a service. Through the configuration of Virtual Service, an application needs to specify only an address of the target service when accessing the target service. In an actual request, routing traffic to a backend with a specific feature is executed according to a routing rule configured on Virtual Service. In addition, the Gateway to be associated may also be configured on the processing rule configuration interface, to indicate that the traffic processing rule defined on VirtualService is executed for traffic from the Gateway.

Step 307: The master node 111 sends the service information, the traffic monitoring rule, and the traffic processing rule to the Envoy in the VPC 112 of the target tenant.

During specific implementation, there is a special communication protocol between the master node 111 and the Envoy, for example, an XDS. Therefore, when the service information, the traffic monitoring rule, and the traffic processing rule are delivered, the information needs to be processed according to the communication protocol before the information is delivered.

During specific implementation, the master node 111 generates an LDS according to the traffic monitoring rule in the gateway and the XDS protocol; generates an RDS according to the traffic processing rule of the target service; and generates a CDS and an EDS based on the service information. The CDS and the EDS may be understood as service instance discovery rules.

It should be noted that, this embodiment of this application is not intended to limit a sequence in which the service information, the traffic monitoring rule, and the traffic processing rule are delivered. The traffic monitoring rule may be delivered after the gateway is created, the service information may be delivered after the service information is obtained, and the traffic processing rule may be delivered after the traffic processing rule is obtained. Certainly, the service information, the traffic monitoring rule, and the traffic processing rule may be sent together, or may be sent separately. This is not specifically limited in embodiments of this application.

It should be noted that, after the traffic monitoring rule is delivered, the traffic monitoring rule does not need to be repeatedly delivered on the basis that the traffic monitoring rule does not change. Different target services have different traffic processing rules and service information. Therefore, for different target services, traffic processing rules and service information of the target services need to be delivered.

Step 308: The Envoy in the VPC 112 performs service governance on the target service according to a service governance rule, where the service governance rule indicates the service information, the target monitoring rule, and the traffic processing rule.

In this embodiment of this application, the service instance discovery rules, the target monitoring rule, and the traffic processing rule that correspond to the target service are collectively referred to as the service governance rule.

In a possible case, the Envoy is configured to forward, according to the service governance rule of the target service, north-south traffic sent by the gateway to the service instance of the target service.

It should be noted that, the gateway herein may be understood as an ingress gateway (Ingress Gateway). Ingress is for managing, at an entry, traffic requesting to a service in a cluster. The Ingress is an endpoint that is in a local cluster network and that is pointed to by traffic originating from outside a local network. The traffic is first routed to exposed entry points, to determine specific traffic allowed to enter by executing some rules and policies of the local network. If the traffic does not pass through the entry points, the traffic cannot be connected to any service in the cluster. If an entry point allows traffic to enter, the traffic is proxied to an appropriate node in the local network. Therefore, the Ingress Gateway is configured to manage inbound traffic at an edge of a mesh.

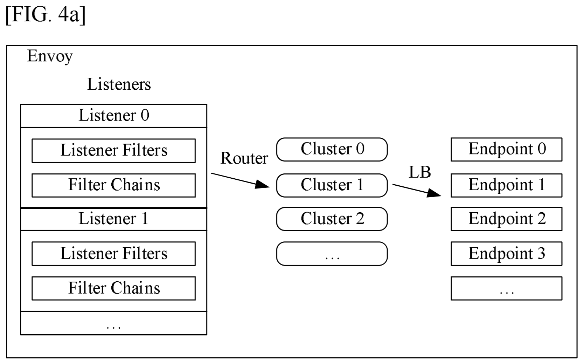

During specific implementation, as shown in FIG. 4a, in a process in which the master node 111 performs service governance on the target service, the Envoy may first cause a request sent by the gateway to pass through Listeners. The Listeners include a plurality of Listeners, and each Listener includes Listener Filters and Filter Chains, so that the request is processed by using various Filters such as L3/L4/L7 Filters. Then, the request is routed to a specified Cluster based on a Router (router), a target address of an Endpoint is determined by a loadbalance (Loadbalance, LB) service, and the request is sent to the Endpoint. The Endpoint sends the request to a managed Pod.

For example, by using processing an HTTP request as an example, the Envoy includes one HTTP router filter, and the HTTP router filter may be installed to execute an advanced routing task. In a process of processing the HTTP request, the listener in the Envoy receives the request and sends the request to the HTTP router filter. After completing processing, the HTTP router filter sends the request to an application cluster (Cluster) discovered by the CDS according to a routing rule determined by the RDS. An Endpoint in the application cluster (Cluster) really processes the request and sends the request to a Pod.

It should be noted that, that the Endpoint processes the request is only used as an example, and does not constitute a specific limitation. In some possible implementations, an EndpointSlice may alternatively process the request.

In another possible case, the Envoy is configured to send a request generated by the target service to the gateway according to the service governance rule (the service instance discovery rules, the target monitoring rule, and the traffic processing rule) of the target service. The gateway sends the request to the outside of a service mesh, or to another managed cluster of the target tenant.

It should be noted that, when the gateway sends the request to the outside of the service mesh, the gateway may be understood as an egress gateway (Egress Gateway). The Egress Gateway is a concept symmetric with the Ingress Gateway, defines an exit of the service mesh, allows functions (such as monitoring and routing rules) of the Istio to be applied to outbound traffic of the service mesh, and allows a service inside the service mesh to access the outside.

When the gateway sends the request to the another managed cluster of the target tenant, the gateway may be understood as an east-west gateway (Gateway).

In some cases, there may be a mutual call relationship between services in the plurality of clusters of the target tenant. In this embodiment of this application, communication between services in different clusters is implemented by using a gateway (Gateway). For example, for a cluster 01 and a cluster 02 of the target tenant, a service A in the cluster 01 and a service B in the cluster 02 cannot directly communicate with each other, and the services need to be exposed to each other through the east-west gateway.

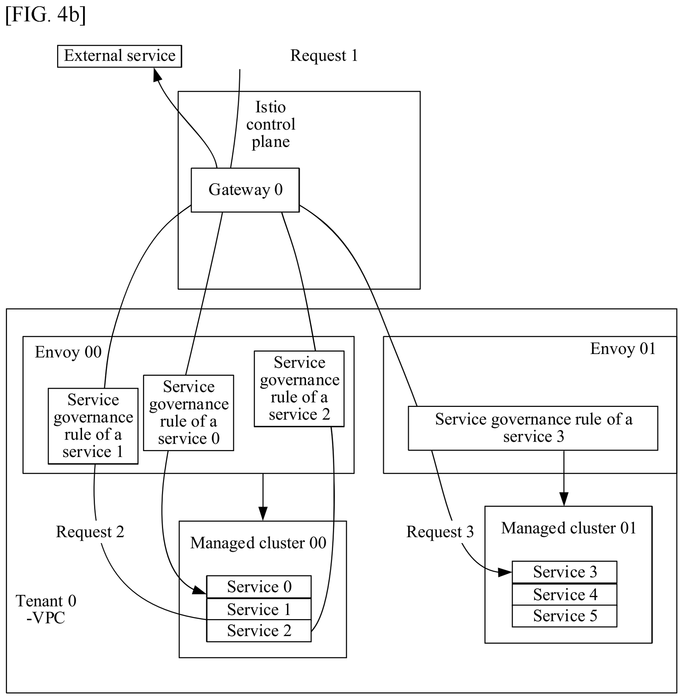

For example, as shown in FIG. 4b, a tenant 0-VPC (a VPC of a tenant 0) includes an Envoy 00, an Envoy 01, a managed cluster 00, and a managed cluster 01. Services service 0, service 1, and service 2, three services in total, are deployed in the managed cluster 00 and managed by the Envoy 00. Services service 3, service 4, and service 5, three services in total, are deployed in the managed cluster 01 and managed by the Envoy 01. The tenant 0 publishes only the service 0, the service 1, and the service 2 that are deployed in the managed cluster 00 and the service 3 deployed in the managed cluster 01. In this case, the Envoy 00 performs service governance on the service 0, the service 1, and the service 2, and the Envoy 01 performs service governance on the service 3, and does not need to perform service governance on the service 4 and the service 5. In the Istio, a gateway0 (a gateway of the tenant 0) is deployed, and service governance rules corresponding to the service 0, the service 1, the service 2, and the service 3 are deployed. Then, the Envoy 00 may obtain the service governance rule of the service 0, the service governance rule of the service 1, and the service governance rule of the service 2, and the Envoy 01 may obtain the service governance rule of the service 3.

Then, in a service governance process, when a user outside the cluster calls the service 0, after the gateway 0 determines that a request 1 can enter the gateway 0, the gateway 0 forwards the request 1 to the Envoy 00. After the Envoy 00 processes the request 1 according to the service governance rule of the service 0, the Envoy 00 forwards the request 1 to a service instance (Pod) in which the service 0 in the managed cluster 00 is located.

When the service 1 in the managed cluster 00 accesses an external service of the cluster, the service 1 initiates a request 2. After the Envoy 00 processes the request 2 according to the service governance rule of the service 1, the Envoy 00 forwards the request 2 to the gateway 0. After the gateway 0 determines that the request 2 can go outbound, the gateway 0 forwards the request 2 to the external service.

When the service 2 in the managed cluster 00 accesses the service 3 in the managed cluster 01, the service 2 initiates a request 3. After the Envoy 00 processes the request 3 according to the service governance rule of the service 2, the Envoy 00 forwards the request 3 to the gateway 0. After the gateway 0 determines that the request 3 can enter the gateway 0, the gateway 0 forwards the request 3 to the Envoy 01. After the Envoy 01 processes the request 3 according to the service governance rule of the service 3, the Envoy 01 forwards the request 3 to a service instance (Pod) in which the service 3 in the managed cluster 01 is located.

It should be noted that, in this embodiment of this application, for different tenants, requests are forwarded to Envoys in VPCs 112 of the tenants through gateways of the different tenants.

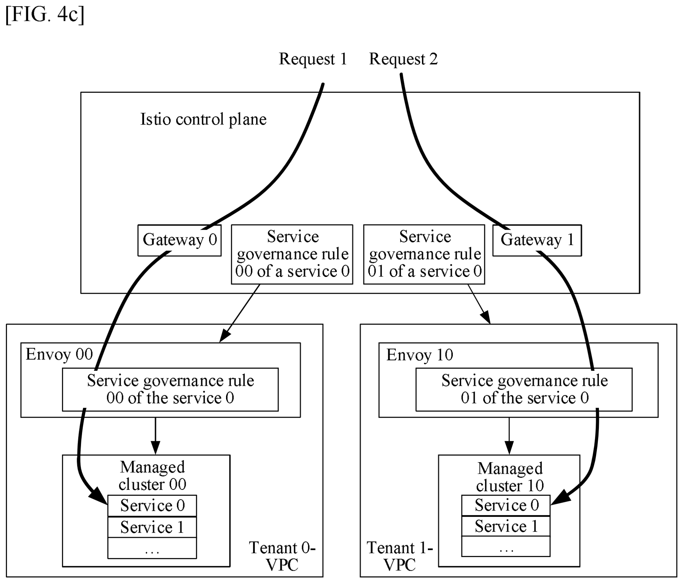

For example, as shown in FIG. 4c, a tenant 0-VPC (a VPC of a tenant 0) includes an Envoy 00 and a managed cluster 00, and a tenant 1-VPC (a VPC of a tenant 1) includes an Envoy 10 and a managed cluster 10. Services service 0, service 1, ... are deployed in the managed cluster 00, and traffic management is performed by the Envoy 00. Services service 0, service 1, ... are deployed in the managed cluster 10, and traffic management is performed by the Envoy 10.

The tenant 0 and the tenant 1 each publish the service 0. The Istio control plane deploys, for the tenant 0, a gateway gateway 0 of the tenant 0, configures a service governance rule 00 of the service 0, and delivers the service governance rule 00 to the Envoy 00; and deploys, for the tenant 1, a gateway gateway 1 of the tenant 1, configures a service governance rule 01 of the service 0, and deliver the service governance rule 01 to the Envoy 10. Subsequently, related traffic of the tenant 0 is managed through the gateway 0, and related traffic of the tenant 1 is managed through the gateway 1.

When a user outside the cluster calls the service 0 in the managed cluster 00, after the gateway 0 determines that a request 1 can enter the gateway 0, the gateway 0 forwards the request 1 to the Envoy 00. After the Envoy 00 processes the request 1 according to the service governance rule 00 of the service 0, the Envoy 00 forwards the request 1 to a service instance (Pod) in which the service 0 in the managed cluster 00 is located.

When the user outside the cluster calls the service 0 in the managed cluster 10, after the gateway 1 determines that a request 2 can enter the gateway 1, the gateway 1 forwards the request 2 to the Envoy 10. After the Envoy 10 processes the request 2 according to the service governance rule 01 of the service 0, the Envoy 10 forwards the request 2 to a service instance (Pod) in which the service 0 in the managed cluster 10 is located.

In this embodiment of this application, it should be noted that, if there are the plurality of managed clusters of the target tenant, and the plurality of managed clusters are managed by the plurality of Envoys, the gateway of the target tenant is associated with the plurality of Envoys. If the target service is deployed in each of the plurality of managed clusters, the service governance rule of the target service is sent to the plurality of Envoys associated with the gateway. During specific implementation, the gateway may determine one Envoy in the plurality of Envoys through load balance, and forward a request to the Envoy. Alternatively, the gateway may forward the request to a plurality of Envoys. This is not specifically limited in embodiments of this application. Specifically, a rule for forwarding the request to the Envoy may be determined according to an actual requirement.

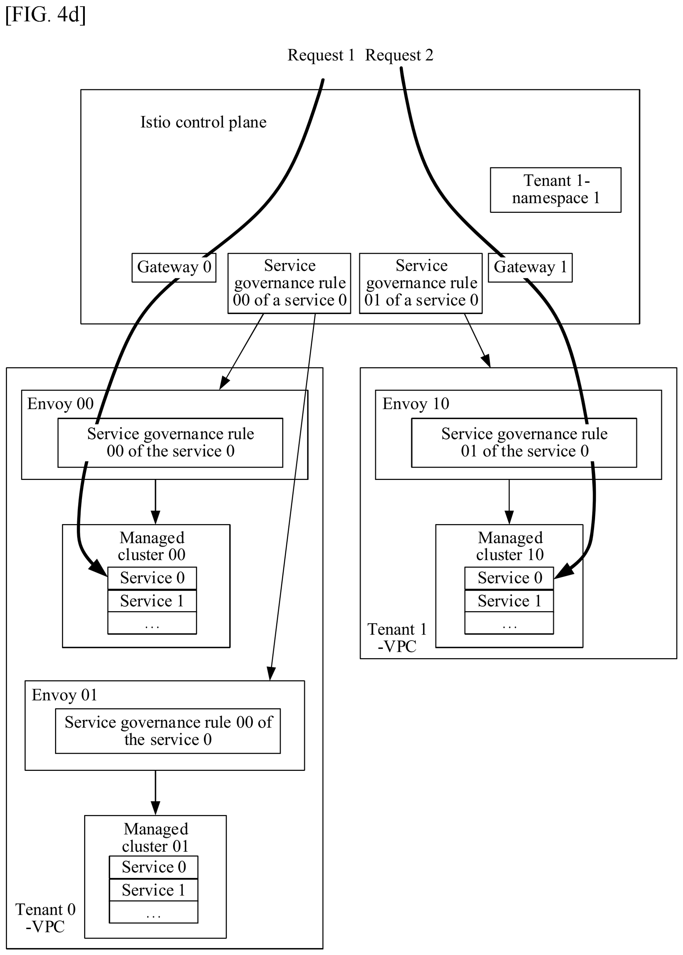

For example, as shown in FIG. 4d, a difference between FIG. 4d and FIG. 4c lies in that, the tenant 0-VPC (the VPC of the tenant 0) further includes an Envoy 01 and a managed cluster 01. Services service 0, service 1, ... are deployed in the managed cluster 01, and traffic management is performed by the Envoy 01. The service 0 is deployed in each of the managed cluster 00 and the managed cluster 01. Therefore, the service governance rule 00 of the service 0 is delivered to the Envoy 00 and the Envoy 01.

When the user outside the cluster calls the service 0 in the managed cluster 00, after the gateway 0 determines that the request 1 can enter the gateway 0, the gateway 0 may perform load balance (for example, by a loadbalance service associated with the gateway 0), and select to forward the request to the Envoy 00 or the Envoy 01. Assuming that the Envoy 00 is selected, the request 1 is forwarded to the Envoy 00. After the Envoy 00 processes the request 1 according to the service governance rule 00 of the service 0, the Envoy 00 forwards the request 1 to the service instance (Pod) in which the service 0 in the managed cluster 00 is located.

In this solution, a single control plane performs service isolation at a tenant level. In this way, same services of different tenants are considered as different services. During service governance, service governance rules of the tenants are delivered to traffic proxies of the tenants, such as Envoys, so that logical multi-tenancy with single control plane is implemented, and resource deployment can be resolved to some extent.

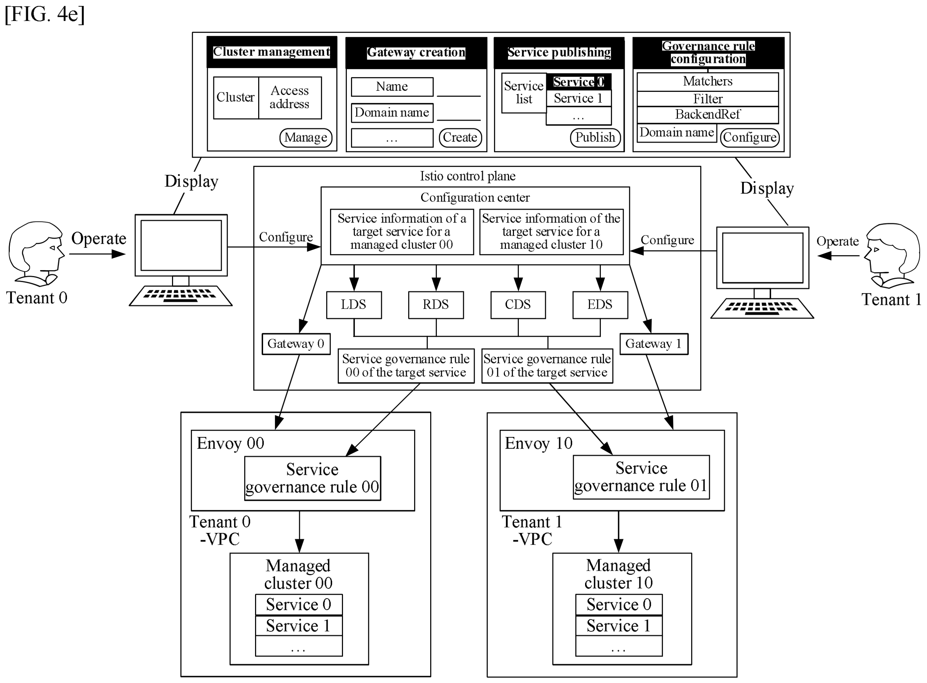

A specific application of the service governance method is described based on the service governance method provided above. FIG. 4e is a schematic flowchart of a specific application of a service governance method according to an embodiment of this application. As shown in FIG. 4e, it is assumed that a VPC of a tenant 0 is denoted as a tenant 0-VPC, and a VPC of a tenant 1 is denoted as a tenant 1-VPC. Specific content includes:

The tenant 0 displays a configuration interface on a computer, where the configuration interface includes interfaces for managing a cluster, creating a gateway, publishing a service, and configuring a traffic processing rule. Then, the tenant 1 operates the configuration interface, determines configuration information, and stores the configuration information in a configuration center of Istio. In this way, a control plane component of the Istio monitors the configuration center, to use a cluster 00 in the tenant 0-VPC as a managed cluster 00. It should be noted that, after the cluster 00 is managed, the configuration center may include service information of a target service for the managed cluster 00. The control plane component of the Istio creates an Envoy 00 in the tenant 0-VPC; creates a gateway gateway 0 of the tenant 0; and determines a service governance rule 00 of the target service of the tenant 0 based on configuration parameters of an LDS, an RDS, a CDS, and an EDS and the service information of the target service for the managed cluster 00, and sends the service governance rule 00 to the Envoy 00.

The tenant 1 displays a configuration interface on a computer. Then, the tenant 1 operates the configuration interface, determines configuration information, and stores the configuration information in the configuration center of the Istio. After a cluster is managed, the configuration center may include service information of a target service. In this way, the control plane component of the Istio monitors the configuration center, to use a cluster 10 in the tenant 1-VPC as a managed cluster 10. After the cluster 10 is managed, the configuration center may include service information of the target service for the managed cluster 10. The control plane component of the Istio creates an Envoy 10 in the tenant 1-VPC; creates a gateway gateway 1 of the tenant 1; and determines a service governance rule 01 of the tenant 1 based on the configuration parameters of the LDS, the RDS, the CDS, and the EDS and the service information of the target service for the managed cluster 10, and sends the service governance rule 01 to the Envoy 10.

In this embodiment of this application, the control plane performs service isolation at a tenant level for the target service. In this embodiment of this application, the target service has an isolation identifier, and the isolation identifier may be understood as distinguishing between same services of different tenants by a master node 111, so that same services of different tenants are considered as different services.

In this embodiment of this application, same services of different tenants are isolated. Currently, isolation is mainly implemented in two manners.

In a possible manner, service isolation may be implemented by using labels of services. Correspondingly, the isolation identifier is a label of the service. Specifically, when a target tenant configures a gateway, the target tenant may configure a label of the target service. Because different tenants have different gateways, services that have a same label and that are configured for different gateways are also considered by the control plane as different services.

In a possible manner, service isolation may be implemented by using namespaces. Correspondingly, the isolation identifier may be a name of a namespace. When a service is isolated by using a namespace, the control plane needs to map the target service to a namespace at the tenant level to implement service isolation, so that the control plane considers that the service is a service exclusive to a tenant. For example, the namespace at the tenant level may be based on an identifier of the tenant and an identifier of a namespace in which the service is located, to implement service isolation at the tenant level. In this way, for same services, if VPCs 112 in which the services are located are different, the control plane considers that the services are different services.

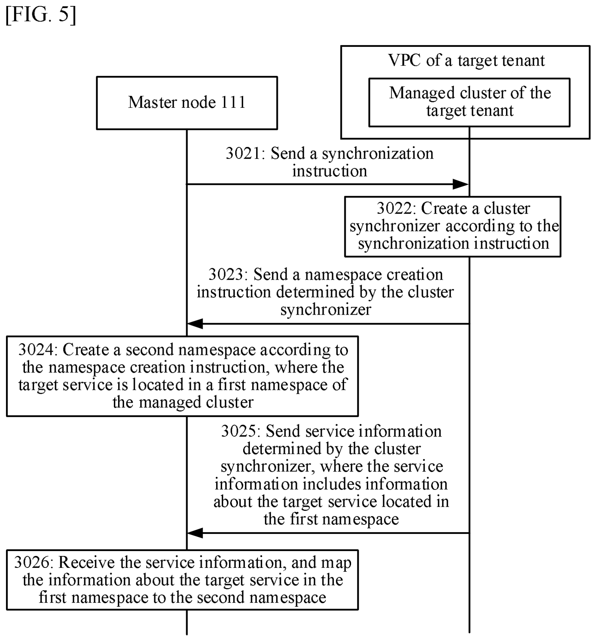

In a scenario in which the namespace at the tenant level is used for differentiation, generally, in a process of synchronizing service information of a service to the master node, the service is mapped to the namespace at the tenant level to implement service isolation. During specific implementation, the process of synchronizing the service information of the service to the master node may be as follows: After managing a managed cluster of the tenant, the master node 111 installs a cluster synchronizer in the managed cluster of the tenant. For example, the master node 111 may access the managed cluster based on an access address of the managed cluster, and install the cluster synchronizer in the managed cluster. Assuming that a namespace of a service in the managed cluster is a first namespace, the cluster synchronizer may control the master node 111 to create a new namespace (which is for implementing service isolation at the tenant level, and may be referred to as a second namespace for ease of description and differentiation) corresponding to the first namespace, and map the service to the second namespace, for example, synchronize information about the service in the first namespace to the second namespace. For example, as shown in FIG. 5, based on the embodiment shown in FIG. 3, in this embodiment of this application, step 302 includes the following steps.

Step 3021: The master node 111 sends the synchronization instruction to the managed cluster of the target tenant.

Step 3022: The managed cluster of the target tenant creates a cluster synchronizer according to the synchronization instruction.

Step 3023: The managed cluster of the target tenant sends, to the master node 111, a namespace creation instruction determined by the cluster synchronizer.

Step 3024: The master node 111 creates a second namespace according to the namespace creation instruction, where the target service is located in a first namespace of the managed cluster.

For example, a name of the second namespace may include an identifier of the target tenant and an identifier, for example, a name, of the first namespace in which the target service is located. Correspondingly, the namespace creation instruction includes the identifier of the first namespace. In this way, different target tenants have different second namespaces, to implement service isolation at the tenant level.

Step 3025: The managed cluster of the target tenant sends, to the master node 111, service information determined by the cluster synchronizer, where the service information includes information about the target service located in the first namespace.

Step 3026: The master node 111 receives the service information, and maps the information about the target service in the first namespace to the second namespace.

It should be noted that, for a same service, first namespaces of the service for different tenants may be the same, but second namespaces of the service are different, to implement service isolation. Because services of different tenants belong to different second namespaces, the master node 111 considers that the services are different services, and subsequently obtains service governance rules of the different services.

It should be noted that, the namespace provides a resource isolation mechanism. A resource name in a same namespace needs to be unique, but resource names in different namespaces may be the same. In addition, for the master node 111, a namespace needs to be unique in a single cluster, but a same namespace is allowed to be created in different clusters. In a single-tenant and multi-cluster scenario, namespaces with a same name are created in different clusters, and service instances corresponding to a same service are deployed in the plurality of namespaces with the same name. In this way, different service instances corresponding to the same service can be deployed in different clusters, and a normal response of the service is not affected when a single cluster is faulty, thereby improving availability of the service.

For example, the target tenant has M (greater than or equal to 2) managed clusters, the M managed clusters have a same namespace N1, information about a service A is deployed in all namespaces N1, and the service A is published in all the M managed clusters. In this case, the master node 111 creates a namespace n1, and maps information about the service A in the M managed clusters to the namespace n1. In this way, the master node 111 may learn of service instances of the service A in the M managed clusters of the target tenant by using the namespace n1, so that service governance rules of the service Ain the M managed clusters are the same.

In the scenario, if a plurality of managed clusters of one tenant may be managed by a plurality of Envoys, a gateway of the tenant is associated with the plurality of Envoys. If the target service is deployed in each of the plurality of managed clusters, the service governance rule of the target service is sent to the plurality of Envoys associated with the gateway. In a service governance process, the gateway may determine one Envoy in the plurality of Envoys by a loadbalance service, and forward a request to the Envoy.

The following uses service governance in the scenario as an example.

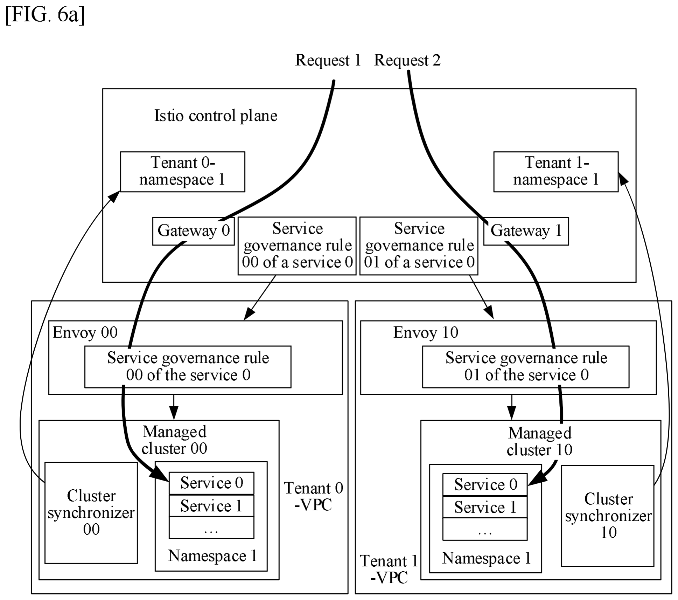

As shown in FIG. 6a, a tenant 0-VPC (a VPC of a tenant 0) includes an Envoy 00 and a managed cluster 00, and a tenant 1-VPC (a VPC of a tenant 1) includes an Envoy 10 and a managed cluster 10. Services service 0, service 1, ... are deployed in the managed cluster 00, the services service 0, service 1, ... are located in a namespace 1, and traffic management is performed by the Envoy 00. Services service 0, service 1, ... are deployed in the managed cluster 10, the services service 0, service 1, ... are located in a namespace 1, and traffic management is performed by the Envoy 10.

The tenant 0 and the tenant 1 each publish the service 0.

The Istio control plane creates, for the tenant 0, a cluster synchronizer 00 in the managed cluster 00. The cluster synchronizer 00 controls the Istio control plane to create a namespace tenant 0-namespace 1 of a namespace 1 of the tenant 0, and maps information about the service 0 in the managed cluster 00 to the tenant 0-namespace 1. The Istio control plane deploys a gateway gateway 0 of the tenant 0, configures a service governance rule 00 of the service 0, and delivers the service governance rule 00 to the Envoy 00.

The Istio control plane creates, for the tenant 1, a cluster synchronizer 10 in the managed cluster 10. The cluster synchronizer 10 controls the Istio control plane to create a namespace tenant 1-namespace 1 of a namespace 1 of the tenant 1, and maps information about the service 0 in the managed cluster 10 to the tenant 1-namespace 1. The Istio control plane deploys a gateway gateway1 of the tenant 1, configures a service governance rule 01 of the service 0, and delivers the service governance rule 01 to the Envoy 10.

Subsequently, related traffic of the tenant 0 is managed through the gateway 0, and related traffic of the tenant 1 is managed through the gateway 1.

When a user outside the cluster calls the service 0 in the managed cluster 00, after the gateway 0 determines that a request 1 can enter the gateway 0, the gateway 0 processes the request 1 and then forwards the request 1 to the Envoy 00. After the Envoy 00 processes the request 1 according to the service governance rule 00 of the service 0, the Envoy 00 forwards the request 1 to a service instance (Pod) in which the service 0 in the managed cluster 00 is located.

When the user outside the cluster calls the service 0 in the managed cluster 10, after the gateway 1 determines that a request 2 can enter the gateway 1, the gateway 1 processes the request 2 and then forwards the request 2 to the Envoy 10. After the Envoy 10 processes the request 2 according to the service governance rule 01 of the service 0, the Envoy 10 forwards the request 2 to a service instance (Pod) in which the service 0 in the managed cluster 10 is located.

It should be noted that, in a related technology, if namespaces in managed clusters of different tenants are the same, and a same service is deployed in the namespaces, the Istio control plane considers that the services are a same service, and uses a same service governance rule. As a result, service governance at the tenant level cannot be implemented. However, in this embodiment of this application, for a same service deployed in managed clusters of different tenants, the Istio control plane may create different namespaces for different tenants, and map a service deployed in a managed cluster of a tenant to a namespace of the tenant, to implement service isolation at the tenant level.

In the scenario, for managed clusters of different tenants, each managed cluster is proxied by one Envoy. If the target service is deployed in managed clusters of different tenants, for each tenant, a service governance rule of the tenant for the target service is sent to an Envoy in a VPC 112 of the tenant. In a service governance process, a gateway may forward a related request to the Envoy.

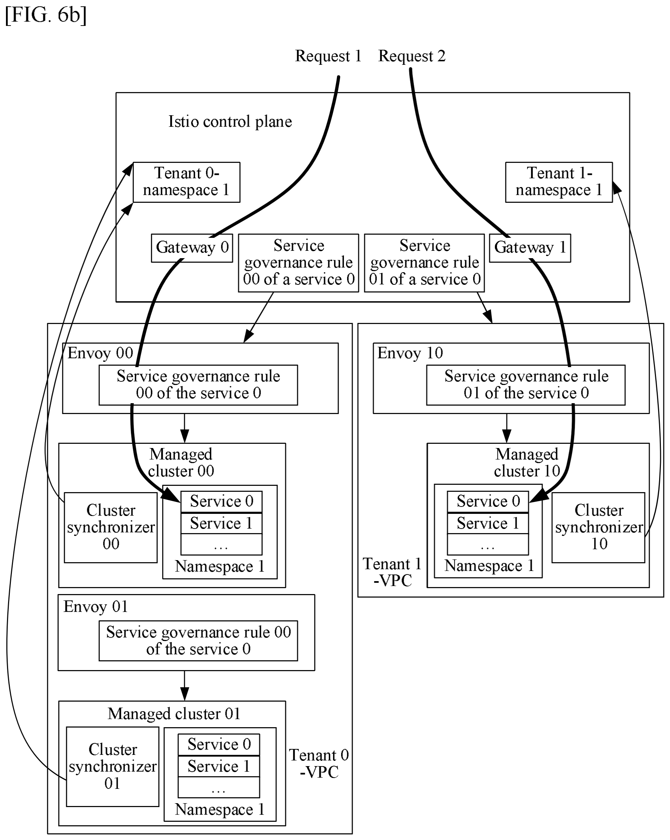

For example, as shown in FIG. 6b, a difference between FIG. 6b and FIG. 6a is as follows:
The tenant 0-VPC (the VPC of the tenant 0) further includes an Envoy 01 and a managed cluster 01. Services service 0, service 1, ... are deployed in the managed cluster 01, the services service 0, service 1, ... are located in a namespace 1, and traffic management is performed by the Envoy 01.

The Istio control plane creates, for the tenant 0, a cluster synchronizer 01 in the managed cluster 01. The cluster synchronizer 00 controls the Istio control plane to create the namespace tenant 0-namespace 1 of the namespace 1 of the tenant 0, and maps the information about the service 0 in the managed cluster 00 to the tenant 0-namespace 1. The cluster synchronizer 01 maps information about the service 0 in the managed cluster 01 to the tenant 0-namespace 1. The Istio control plane delivers the service governance rule 00 of the service 0 to the Envoy 00 and the Envoy 01.

Subsequently, related traffic of the tenant 0 is managed through the gateway 0.

When the user outside the cluster calls the service 0 in the managed cluster 00, after the gateway 0 determines that the request 1 can enter the gateway 0 and processes the request 1, the gateway 0 may perform load balance (by a loadbalance service associated with the gateway 0), and select to forward the request to the Envoy 00 or the Envoy 01. Assuming that the Envoy 00 is selected, the request 1 is forwarded to the Envoy 00. After the Envoy 00 processes the request 1 according to the service governance rule 00 of the service 0, the Envoy 00 forwards the request 1 to the service instance (Pod) in which the service 0 in the managed cluster 00 is located.

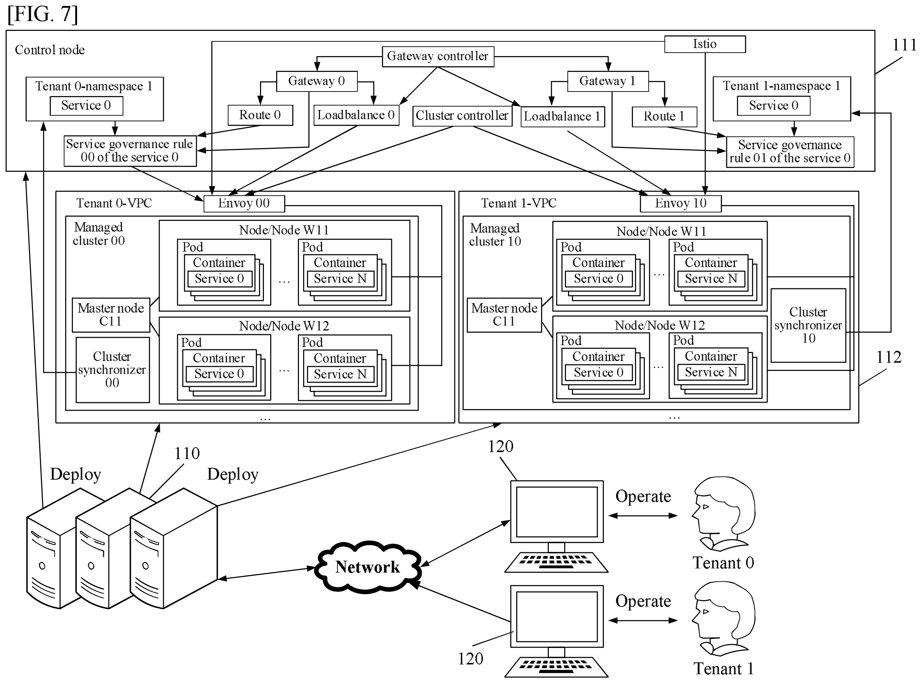

A specific application of the service governance method is described based on the service governance method provided above. FIG. 7 is a schematic flowchart of a specific application of a service governance method according to an embodiment of this application. As shown in FIG. 7, it is assumed that a VPC of a tenant 0 is denoted as a tenant 0-VPC, and a VPC of a tenant 1 is denoted as a tenant 1-VPC. Specific content includes:
The tenant 0 performs an operation by using a terminal device 120, to publish a service 0 (located in a namespace 1), manage a cluster 00, and create a gateway and configure a routing rule. Correspondingly, an Istio control plane manages, for the tenant 0, the cluster 00 in the tenant 0-VPC, uses the cluster 00 in the tenant 0-VPC as a managed cluster 00, creates an Envoy 00 in the tenant 0-VPC (to communicate with a service instance in the managed cluster 00), and creates a cluster synchronizer 00 in the managed cluster 00. The cluster synchronizer 00 controls the Istio control plane to create a namespace tenant 0-namespace 1 of a namespace 1 of the tenant 0, and maps information about the service 0 in the namespace 1 of the managed cluster 00 to the tenant 0-namespace 1. The Istio control plane creates a gateway gateway 0 and a loadbalance service loadbalance 0 of the tenant 0, where the gateway 0 is associated with the loadbalance 0, and a routing rule route 0 (associated with the gateway 0) configured for the service 0 may be, for example, an Httproute; determines a service governance rule 00 of the service 0 based on information about the service 0 in the gateway 0, the route 0, and the tenant 0-namespace 1, and information (which is not shown in the figure, and may be, for example, an Endpoint or a Pod associated with the service 0) that is about the service 0 and that may additionally exist; and delivers the service governance rule 00 to the Envoy 00 of the tenant 0-VPC.

The tenant 1 performs an operation by using a terminal device 120, to publish a service 0 (located in a namespace 1), manage a cluster 10, and create a gateway and configure a routing rule. Correspondingly, the Istio control plane manages, for the tenant 1, the cluster 10 in the tenant 1-VPC, uses the cluster 10 in the tenant 1-VPC as a managed cluster 10, creates an Envoy 10 in the tenant 1-VPC (to communicate with a service instance in the managed cluster 10), and creates a cluster synchronizer 10 in the managed cluster 10. The cluster synchronizer 10 controls the Istio control plane to create a namespace tenant 1-namespace 1 of a namespace 1 of the tenant 1, and maps information about the service 0 in the namespace 1 of the managed cluster 10 to the tenant 1-namespace 1. The Istio control plane creates a gateway gateway 1 and a loadbalance service loadbalance 1 of the tenant 1, where the gateway 1 is associated with the loadbalance 1, and a routing rule route 1 (associated with the gateway 1) configured for the service 0 may be, for example, an Httproute; determines a service governance rule 01 of the service 0 based on information about the service 0 in the gateway 1, the route 1, and the tenant 1-namespace 1, and information (which is not shown in the figure, and may be, for example, an Endpoint or a Pod associated with the service 0) that is about the service 0 and that may additionally exist; and delivers the service governance rule 01 to the Envoy 10 of the tenant 1-VPC.

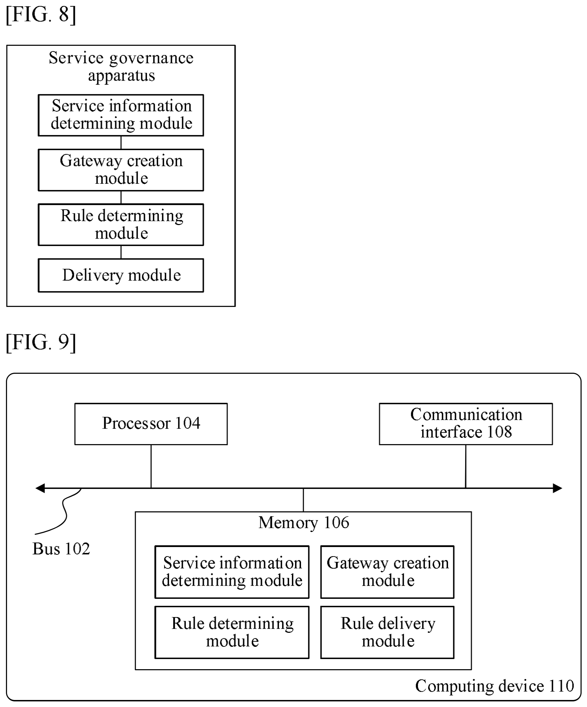

This application further provides a service governance apparatus. As shown in FIG. 8, the apparatus includes:
a service information determining module, configured to determine service information corresponding to the target tenant, where the service information indicates information about a service instance of the target service in the managed cluster;
a gateway creation module, configured to create a gateway corresponding to the target tenant, where the gateway includes a traffic monitoring rule;
a rule determining module, configured to determine a traffic processing rule corresponding to the target service, where the traffic processing rule is associated with a target monitoring rule in the traffic monitoring rule; and
a delivery module, configured to send the service information, the target monitoring rule, and the traffic processing rule to a traffic proxy in a virtual private cloud of the target tenant, where the traffic proxy is configured to perform service governance on the target service according to a service governance rule, and the service governance rule indicates the service information, the traffic monitoring rule, and the target monitoring rule.

The service information determining module, the gateway creation module, the rule determining module, and the delivery module may all be implemented by using software or hardware. For example, the following describes an implementation of the service information determining module by using the service information determining module as an example. Similarly, for implementations of the gateway creation module, the rule determining module, and the delivery module, refer to the implementation of the service information determining module.

The module is used as an example of a software functional unit, and the service information determining module may include code running on a computing instance. The computing instance may include at least one of a physical host (a computing device), a virtual machine, and a container. Further, there may be one or more computing instances. For example, the service information determining module may include code running on a plurality of hosts/virtual machines/containers. It should be noted that, the plurality of hosts/virtual machines/containers used to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Usually, one region may include a plurality of AZs.

Similarly, the plurality of hosts/virtual machines/containers used to run the code may be distributed in a same virtual private cloud (virtual private cloud, VPC), or may be distributed in a plurality of VPCs. Usually, one VPC is set in one region. A communication gateway needs to be set in each VPC for communication between two VPCs in a same region or between VPCs in different regions. Interconnection between VPCs is implemented through the communication gateway.

The module is used as an example of a hardware functional unit, and the service information determining module may include at least one computing device like a server. Alternatively, the service information determining module may be a device implemented by using an application-specific integrated circuit (application-specific integrated circuit, ASIC), a programmable logic device (programmable logic device, PLD), or the like. The PLD may be implemented by using a complex programmable logic device (complex programmable logic device, CPLD), a field programmable gate array (field programmable gate array, FPGA), generic array logic (generic array logic, GAL), or any combination thereof.

The plurality of computing devices included in the service information determining module may be distributed in a same region, or may be distributed in different regions. The plurality of computing devices included in the service information determining module may be distributed in a same AZ, or may be distributed in different AZs. Similarly, the plurality of computing devices included in the service information determining module may be distributed in a same VPC, or may be distributed in a plurality of VPCs. The plurality of computing devices may be any combination of the following computing devices: a server, an ASIC, a PLD, a CPLD, an FPGA, a GAL, and the like.

It should be noted that, in another embodiment, the service information determining module may be configured to perform any step in the service governance method, the gateway creation module may be configured to perform any step in the service governance method, the rule determining module may be configured to perform any step in the service governance method, and the delivery module may be configured to perform any step in the service governance method. Steps that the service information determining module, the gateway creation module, the rule determining module, and the delivery module are responsible for implementing may be specified based on needs. The service information determining module, the gateway creation module, the rule determining module, and the delivery module separately implement different steps in the service governance method, to implement all functions of the service governance apparatus.

This application further provides a computing device 110. As shown in FIG. 9, the computing device 110 includes a bus 102, a processor 104, a memory 106, and a communication interface 108. The processor 104, the memory 106, and the communication interface 108 communicate with each other through the bus 102. The computing device 110 may be a server or a terminal device. It should be understood that, a quantity of processors and a quantity of memories in the computing device 110 are not limited in this application.

The bus 102 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one line is used to represent the bus in FIG. 9, but this does not mean that there is only one bus or only one type of bus. The bus 102 may include a path for transmitting information between components (for example, the memory 106, the processor 104, and the communication interface 108) of the computing device 110.

The processor 104 may include any one or more of the following processors: a central processing unit (central processing unit, CPU), a graphics processing unit (graphics processing unit, GPU), a microprocessor (microprocessor, MP), a digital signal processor (digital signal processor, DSP), or the like.

The memory 106 may include a volatile memory (volatile memory), for example, a random access memory (random access memory, RAM). The processor 104 may further include a nonvolatile memory (nonvolatile memory), for example, a read-only memory (read-only memory, ROM), a flash memory, a hard disk drive (hard disk drive, HDD), or a solid-state drive (solid-state drive, SSD).

The memory 106 stores executable program code, and the processor 104 executes the executable program code to separately implement functions of the service information determining module, the gateway creation module, the rule determining module, and the delivery module that are described above, to implement a service governance method. In other words, the memory 106 stores instructions for performing the service governance method.

The communication interface 108 implements communication between the computing device 110 and another device or a communication network through a transceiver module, for example, but not limited to, a network interface card or a transceiver.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

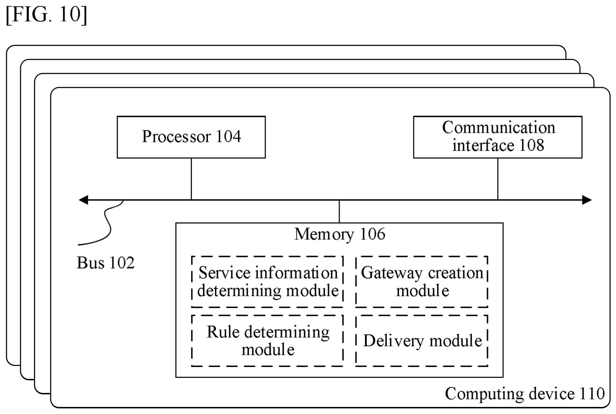

As shown in FIG. 10, the computing device cluster includes at least one computing device 110. A memory 106 in the one or more computing devices 110 in the computing device cluster may store same instructions for performing the service governance method.

Alternatively, in some possible implementations, the memory 106 in the one or more computing devices 110 in the computing device cluster may separately store some instructions for performing a service governance method. In other words, a combination of the one or more computing devices 110 may jointly execute the instructions for performing the service governance method.

It should be noted that, memories 106 in different computing devices 110 in the computing device cluster may store different instructions separately for executing some functions of a service governance apparatus. In other words, the instructions stored in the memories 106 in different computing devices 110 may implement functions of one or more functions of a service information determining module, a gateway creation module, a rule determining module, and a delivery module.

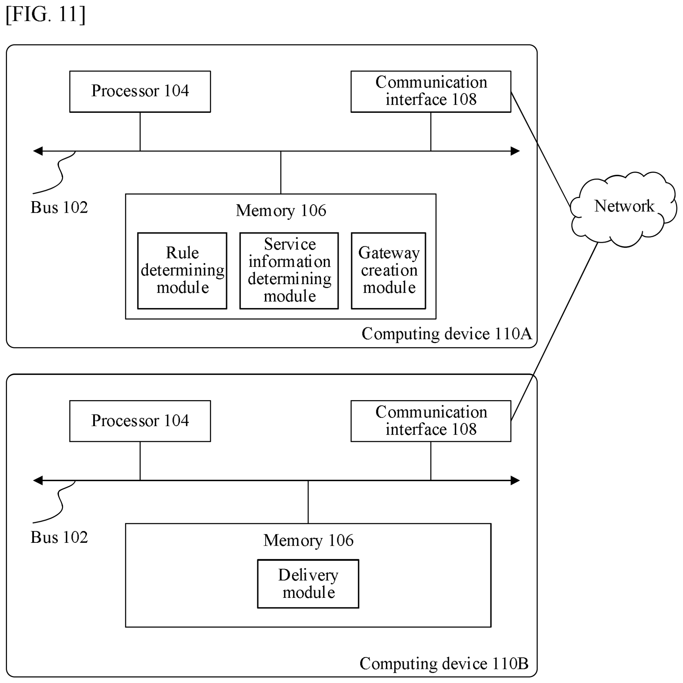

In some possible implementations, the one or more computing devices in the computing device cluster may be connected through a network. The network may be a wide area network, a local area network, or the like. FIG. 11 shows a possible implementation. As shown in FIG. 11, two computing devices 110A and 110B are connected through a network. Specifically, each computing device is connected to the network through a communication interface in the computing device. In this type of possible implementation, a memory 106 in the computing device 110A may store an instruction for executing a function of a service information determining module. In addition, a memory 106 in the computing device 110B stores instructions for executing functions of a gateway creation module, a rule determining module, and a delivery module.

In a connection manner between computing device clusters shown in FIG. 11, it may be considered that storage of information configured by a user needs to be considered in a service governance method provided in this application. Therefore, it is considered that a service information determining module, a gateway creation module, and a rule determining module are executed by the computing device 110A, and a function implemented by a delivery module is executed by the computing device 110B. It should be understood that, functions of the computing device 110A shown in FIG. 11 may alternatively be completed by a plurality of computing devices 110. Similarly, functions of the computing device 110B may alternatively be completed by a plurality of computing devices 110. In addition, to save deployment resources, the service information determining module, the gateway creation module, the rule determining module, and the delivery module may be deployed in one computing device 110.

An embodiment of this application further provides a computer program product including instructions. The computer program product may be software or a program product that includes the instructions and that can run on a computing device or can be stored in any usable medium. When the computer program product runs on at least one computing device, the at least one computing device is caused to perform a service governance method.

An embodiment of this application further provides a computer-readable storage medium. The computer-readable storage medium may be any usable medium accessible by a computing device, or a data storage device, such as a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions, and the instructions indicate the computing device to perform a service governance method.

In the foregoing embodiments, descriptions of each embodiment have respective focuses. For a part that is not described in detail or recorded in an embodiment, refer to related descriptions in another embodiment.

It should be understood that, sequence numbers of the steps do not mean an execution sequence in the foregoing embodiments. The execution sequence of the processes should be determined based on functions and internal logic of the processes, and should not constitute any limitation on the implementation processes of embodiments of this application.

The foregoing describes basic principles of this application with reference to specific embodiments. However, it should be noted that, advantages, benefits, effects, and the like mentioned in this application are only examples rather than limitations, and it cannot be considered that the advantages, benefits, effects, and the like are mandatory for embodiments of this disclosure. In addition, the specific details disclosed above are only intended for purpose of example and for ease of understanding, but are not intended to limit. The foregoing details do not limit a case in which this disclosure needs to be implemented by using the foregoing specific details.

The block diagrams of the components, apparatuses, devices, and systems in this disclosure are only examples, and are not intended to require or imply that connections, arrangements, or configurations need to be performed in a manner shown in the block diagrams. A person skilled in the art will recognize that the components, apparatuses, devices, and systems may be connected, arranged, and configured in any manner. Words such as "include", "contain", and "have" are open words, refer to "including but not limited to", and may be used interchangeably. The terms "or" and "and" used herein refer to the terms "and/or", and may be used interchangeably, unless the context explicitly indicates otherwise. The word "such as" used herein refers to a phrase "such as but not limited to", and may be used interchangeably.

It should be further noted that, in the apparatus, the device, and the method disclosed in this disclosure, the components or the steps may be decomposed and/or recombined. The decompositions and/or recombinations should be considered as equivalent solutions of this disclosure.

The foregoing descriptions have been provided for the purpose of illustration and description. In addition, the descriptions are not intended to limit embodiments of this disclosure to the form disclosed herein. Although a plurality of example aspects and embodiments have been discussed above, a person skilled in the art will recognize some of their variations, modifications, changes, additions, and sub-combinations.

It may be understood that various numbers in embodiments of this application are merely used for differentiation for ease of description, and are not used to limit the scope of embodiments of this application.

## Claims

1. A service governance method, applied to a master node, wherein the master node manages virtual private clouds of a plurality of tenants, a cluster is deployed in the virtual private cloud, and a service is deployed in the cluster; the master node manages a managed cluster of a target tenant in the plurality of tenants, and a target service is deployed in the managed cluster; and the method comprises:
determining service information corresponding to the target tenant, wherein the service information indicates information about a service instance of the target service in the managed cluster;
creating a gateway corresponding to the target tenant, wherein the gateway comprises a traffic monitoring rule;
determining a traffic processing rule corresponding to the target service, wherein the traffic processing rule is associated with a target monitoring rule in the traffic monitoring rule; and
sending the service information, the target monitoring rule, and the traffic processing rule to a traffic proxy in a virtual private cloud of the target tenant, wherein the traffic proxy is configured to perform service governance on the target service based on the service information, the traffic monitoring rule, and the target monitoring rule.

2. The method according to claim 1, wherein the target service is located in a first namespace of the managed cluster;
the target service is located in a second namespace of the master node; and when managed clusters of different target tenants comprise the target service located in the first namespace, second namespaces that are of the master node and in which the target service of different target tenants is located are different.

3. The method according to claim 2, further comprising:
creating the second namespace, and mapping the target service to the second namespace.

4. The method according to claim 3, wherein creating the second namespace comprises:
installing a cluster synchronizer in the managed cluster of the target tenant; and
creating the second namespace in response to control of the cluster synchronizer.

5. The method according to claim 2, wherein the traffic proxy is configured to manage
a plurality of managed clusters of the target tenant; and
when each of the plurality of managed clusters comprises the target service located in the first namespace, the traffic proxy is configured to perform service governance on the target service in the plurality of managed clusters based on the service information, the traffic monitoring rule, and the target monitoring rule.

6. The method according to any one of claims 1 to 5, wherein the traffic monitoring rule comprises a configuration for a listener resource; and/or
the traffic processing rule comprises a configuration for a route resource.

7. The method according to any one of claims 1 to 6, wherein that the traffic proxy is configured to perform service governance on the target service based on the service information, the traffic monitoring rule, and the target monitoring rule comprises:
based on the service information, the traffic monitoring rule, and the target monitoring rule, forwarding a request entering the gateway to the target service, and/or forwarding, through the gateway, a request sent by the target service to the outside or another managed cluster of the target tenant.

8. The method according to any one of claims 1 to 7, wherein the target service is a part of services that need service governance and that are in a plurality of services deployed in the managed cluster.

9. A service governance apparatus, used in a master node, wherein the master node manages virtual private clouds of a plurality of tenants, a cluster is deployed in the virtual private cloud, and a service is deployed in the cluster; the master node manages a managed cluster of a target tenant in the plurality of tenants, and a target service is deployed in the managed cluster; and the apparatus comprises:
a service information determining module, configured to determine service information corresponding to the target tenant, wherein the service information indicates information about a service instance of the target service in the managed cluster;
a gateway creation module, configured to create a gateway corresponding to the target tenant, wherein the gateway comprises a traffic monitoring rule;
a rule determining module, configured to determine a traffic processing rule corresponding to the target service, wherein the traffic processing rule is associated with a target monitoring rule in the traffic monitoring rule; and
a delivery module, configured to send the service information, the target monitoring rule, and the traffic processing rule to a traffic proxy in a virtual private cloud of the target tenant, wherein the traffic proxy is configured to perform service governance on the target service based on the service information, the traffic monitoring rule, and the target monitoring rule.

10. The apparatus according to claim 9, wherein the target service is located in a first namespace of the managed cluster;
the target service is located in a second namespace of the master node; and when managed clusters of different target tenants comprise the target service located in the first namespace, second namespaces that are of the master node and in which the target service of different target tenants is located are different.

11. The apparatus according to claim 10, further comprising:
a mapping module, configured to create the second namespace, and map the target service to the second namespace.

12. The apparatus according to claim 11, wherein the mapping module is configured to
install a cluster synchronizer in the managed cluster of the target tenant; and create the second namespace in response to control of the cluster synchronizer.

13. The apparatus according to claim 10, wherein the traffic proxy is configured to manage a plurality of managed clusters of the target tenant; and
when each of the plurality of managed clusters comprises the target service located in the first namespace, the traffic proxy is configured to perform service governance on the target service in the plurality of managed clusters based on the service information, the traffic monitoring rule, and the target monitoring rule.

14. The apparatus according to any one of claims 9 to 13, wherein the traffic monitoring rule comprises a configuration for a listener resource; and/or
the traffic processing rule comprises a configuration for a route resource.

15. The apparatus according to any one of claims 9 to 14, wherein the traffic proxy is configured to: based on the service information, the traffic monitoring rule, and the target monitoring rule, forward a request entering the gateway to the target service, and/or forward, through the gateway, a request sent by the target service to the outside or another managed cluster of the target tenant.

16. The apparatus according to any one of claims 9 to 15, wherein the target service is a part of services that need service governance and that are in a plurality of services deployed in the managed cluster.

17. A computing device cluster, comprising at least one computing device, wherein each computing device comprises a processor and a memory; and
a processor of the at least one computing device is configured to execute instructions stored in a memory of the at least one computing device, to cause the computing device cluster to perform the method according to any one of claims 1 to 8.

18. A computer program product comprising instructions, wherein when the instructions are run by a computing device cluster, the computing device cluster is caused to perform the method according to any one of claims 1 to 8.

19. A computer-readable storage medium, comprising computer program instructions, wherein when the computer program instructions are executed by a computing device cluster, the computing device cluster performs the method according to any one of claims 1 to 8.
